# EUROPEAN PATENT SPECIFICATION

(11) **EP 4 253 901 B1**
(45) Date of publication and mention of the grant of the patent: **23.09.2026**
(21) Application number: 22165186.2
(22) Date of filing: 29.03.2022
(51) Int. Cl.: G01B 11/02, G01B 11/30, E01C 19/00, E01C 19/48

(54) **PAVER AND METHOD FOR REAL-TIME DETECTING UNEVENNESS OF A PLANUM**
STRASSENFERTIGER UND VERFAHREN ZUR ECHTZEITERFASSUNG DER UNGLEICHMÄSSIGKEIT EINES PLANUMS
FINISSEUSE DE ROUTE ET PROCÉDÉ DE DÉTECTION EN TEMPS RÉEL D'IRRÉGULARITÉS D'UN PLAN

(43) Date of publication of application: 04.10.2023
(73) Proprietor: Ammann Schweiz AG, 4900 Langenthal (CH); Vinci Construction SAS, 92000 Nanterre (FR)
(72) Inventor: MAHLER, Anton, 30974 Wennigsen (DE); LINDEMANN, Henrik, 31582 Nienburg (DE); GOURIMATE, Aymane, 33703 Merignac (FR); BERRADA, Kamal, 33703 Merignac (FR)
(74) Representative: Eisenführ Speiser

(56) References cited:
- EP-B1- 0 744 494
- CN-A- 111 623 734
- JP-A- H02 284 020
- US-A1- 2013 051 913
- US-A1- 2017 198 445
- US-A1- 2018 340 302
- US-A1- 2022 034 049
- US-B1- 7 845 878

## Description

The invention relates to a a paver and a method for real-time detecting unevenness of a planum with a paver detection system.

A paver, which is also known as road paving machine, is a construction device used to lay asphalt on roads, bridges or similar places such as parking lots. Different types of pavers are known, like chain-driven pavers and wheel-driven pavers. With such a device an asphalt laying process is performed. This process can also be referred to as pavement process or paving process.

In the asphalt laying process with such pavers, it is desired to create an even and plane layer of asphalt. This layer can also be referred to as planum, which is a term in civil engineering that refers to a processed surface of a soil layer. Planum in the context of the invention therefore relates in general to any ground layer in the pavement process of a road or parking lot or the like. Planum can synonym be understood as road layer.

The planum is specified by properties. One of those properties is, besides a slope and a position, the evenness.

In practical execution during the asphalt laying process, it cannot be ensured that an ideal and even planum is formed with the paver. Unwanted or unrecognized unevenness may occur during the asphalt laying process, which can be caused for various reasons.

For example, it is possible that a bigger piece of asphalt sticks the chain or wheel of a chain-driven or wheel-driven paver. In that case, the paver periodically lifts a little, in particular a chain-driven paver. If this lifting is not noticed by the paver operator, it is possible that periodically waves are formed into the planum without notice. It is also possible that the process parameters of the paver are not set properly and the paver forms longer waves into the asphalt, which are not noticeable by the paver operator. It may also happen that in the laying process holes, dents or humps are formed into the planum, because the laying process is not an ideal process. For example, the asphalt that is fed into the paver from an asphalt feeding truck does not always have the same characteristics, and e.g. the homogeneity or temperature of the asphalt may vary.

It is therefore in general desired to detect unevenness in a planum. However, because it is high effort to subsequently repair unevenness after the laying process it is also desired to detect such unevenness directly on site in order to be able to react to unevenness as soon as possible, for instance in real time. A subsequent patching of the asphalt surface is undesirable. It is thus also desired to identify the causes of the unevenness in order to be able to counteract the cause for the unevenness effectively. If the reason for unevenness can be narrowed down, the troubleshooting can be shortened.

US 2013/051913 A1 discloses a road paver having a towing machine that is movable on a plane along a work area, and a screed provided to lay a road pavement, and having at least one measuring device configured to generate a point cloud that depicts a three-dimensional condition of the surface of the plane.

US 2018/340302 A1 discloses a machine train composed of a road milling machine and a road finisher wherein the road milling machine has a profile data determining device, wherein the profile data determining device is configured so that a sequence of height profile data describing the height of the road surface in the longitudinal direction is determined while the road milling machine advances.

EP 0 744 494 B1 discloses a profiler for measuring smoothness of a surface. The profiler comprises a support for locating a reference member above the surface to be measured and a measurer for measuring a distance between a point on the reference member and said surface. Further, a receiver is comprised, the receiver being adapted for receiving a positioning signal from a transmitter from which the position of the reference member can be determined.

CN 111 623 734 A discloses pavement structure depth detection method based on coustic signals, which comprises the following steps: collecting acoustic signals through a sound sensor arranged beside a tire, wherein the acoustic signals are tire/road noise; extracting a first principal component of the acoustic signal using principal component anaysis; the first principal component is a sound pressure level; inputting the first principal component into a nonlinear Gaussian mixture model, and obtaining the output of the nonlinear Gaussian mixture model as the road surface construction depth; the device comprises a sound acquisition unit, a data transmission unit, a calculation unit and a control unit, wherein the sound acquisition unit is used for acquiring sound signals; the method can solve the technical problem that the obtained data is not accurate enough when the acoustic signal is used for predicting the road surface structure depth.

JP H02 284020 A dicloses a method of taking a measurement at a normal travel speed by processing the outputs of noncontact laser displacement gages and a noncontact optical speed indicator while making a measurement vehicle travel.

US 7,845,878 B1 discloses a smoothness indicator for measuring a profile of a road surface. The smoothness indicator includes at least two non-contact elevation distance sensors arranged in pairs including a trailing non-contact elevation distance sensor and a leading non-contact elevation distance sensor disposed in a distance from each other. Further, a slope sensor for measuring an angle of incidence of the distance sensors relative to a horizontal plane is included. The such known smoothness indicator generates an elevation profile of the road surface by calculating an elevation for the second location using an elevation assigned to the first location and an elevation difference between the first and the second location.

US 2017/0198445 A1 discloses a screed assembly for laying a road surface. The screed assembly is adapted to determine a working width.

US 2022/0034049 A1 discloses a system of assisting a paving vehicle to improve a paving job performed by said vehicle. Said assistance comprises steps of receiving job data relating to the paving job, receiving paving best practices data relating to any paving job and processing the job data and the paving best practices data according to an algorithm and based thereon, generating feedback data for improving the paving job. The paving vehicle is assisted by making said generated feedback data available.

It is thus a general desire and the object of the invention to provide a fast, reliable and continuous detection of unevenness of a planum. Furthermore, it is an object of the invention to identify unevenness and to narrow down its cause. At least, an alternative solution should be proposed to known solutions.

This object is solved by a paver according to claim 1 and by a method for real-time detecting unevenness according to claim 10.

According to the invention, a paver with a frame, wherein a screed is movably mounted to the frame, includes , inter alia, a paver detection system for detecting unevenness of a planum is proposed that comprises a first sensor device for measuring a relative position of a stationary part of a paver to the planum, wherein the first sensor device is mounted to the stationary part. Detecting can also be understood as monitoring.

As a further aspect of the invention, the paver detection system is provided for a paver that is also knows as road paver. The paver can be chain-driven, wheel-driven, or similar driven. The paver can also be related to as a tractor or asphalt-laying machine. It is adapted to perform an asphalt laying process. The sensor device can also be understood as sensor or measuring unit. A planum refers to a processed surface of a soil layer with specified properties. Unevenness of the planum refers to dents, waves, holes or humps (short elevations), obstacles or similar. Monitoring refers to a supervision of operations, in this case the supervision of unevenness of the planum. The sensor device includes at least one sensor head or multiple sensor heads. The relative position can also be understood as a relative movement or relative distance. The stationary part is preferably a frame of the paver or a chassis that is fixed to the frame of the paver.

Accordingly, the first sensor device is a sensor that is attached to a fixed part of the paver that keeps the same vertical distance to the planum during the laying process, when the planum is even. In case of a chain-driven paver the chassis is preferably fixed to the frame of the paver. In the case of a wheeled paver, the first sensor device is preferably mounted between wheels of the paver to measure a position of the frame relative to the planum.

On an even planum, the first sensor would indicate the same height or distance of the sensor device to the planum over time.

In case an unevenness occurs, the relative position of the paver varies relative to the planum. For instance, if the paver passes a hump, hole or dent a short-wave this unevenness is detected in the signal of the relative position of the first sensor device to the planum. Therefore, short-waves where the chassis is no longer in contact with the surface result in a height deviation. This height deviation can be detected with the first sensor device. Waves with a long amplitude of the ground are difficult to detect, since the chassis and thus the frame hardly move relative to the ground.

Moreover it may happen that a dent, a wave or a hole in the planum that is transverse to the direction of travel can be bridged by a chain-drive of a chain-driven paver. In this case, the first sensor is not lifted but is able to measure the dent, wave or hole. With the proposed arrangement of the first sensor device, it is possible to detect the cause of an unevenness e.g. even before an unwanted wave is built into the planum. When a height deviation is detected with the first sensor device, the fault has not yet been transferred to the asphalt pavement. It is therefore possible that both a direct influence, e.g. chassis is lifted, and an indirect influence, e.g. a hole in the planum is driven over which has an influence at the screed) can be captured with this arrangement of the first sensor device. This simplifies troubleshooting.

The first sensor device is preferably a contactless distance sensor, in particular an optical distance sensor such as a laser sensor, or an ultrasonic sensor or the like. The first sensor device is in different preferred embodiment a mechanical sensor with a rotary encoder, in particular a guidewire sensor with a rotary encoder.

According to the invention, the paver detection system further comprise a second sensor device for measuring a relative position of a screed of the paver to the planum, wherein the second sensor device being mounted to the screed, and wherein the screed being movably connected to the stationary part of the paver. The sensor measures the relative position of the screed to the planum. This information is preferably used in the levelling system to measure a specified height and to counteract any deviations. The second sensor device is preferably located on the traction arm at the height of the chassis of the paver. On an even planum, the second sensor device would also indicate the same height or distance of the sensor device to the planum. If for example a dent in the planum does not raise the chassis of a chain-driven paver because the chains miss the dents or because the dent is bridged by the chain-drive, the screed on the other hand can be influence when the screed passes the dent. In this case, the second sensor device detects an unevenness that was not detected by the first sensor device. It is thus possible to conclude that only an unevenness error relating to the screed occurred. This simplifies troubleshooting.

The second sensor device is preferably a contactless distance sensor, in particular an optical distance sensor such as a laser sensor, or an ultrasonic sensor or the like. The second sensor device is in different preferred embodiment a mechanical sensor with a rotary encoder, in particular a guidewire sensor with a rotary encoder.

The second sensor device is further preferred placed close to the paver and a levelling system that is attached at the end of the screed. Long waves in the planum are transferred into the newly paved layer. Shorter waves in the ground are only transmitted in a damped manner because both the screed reacts sluggishly. Further preferred a control of the levelling systems is used to filter out waves. Preferably, the levelling system operated as a closed loop system. An adjustment to the closed control loop of the levelling is thus provided. It is preferably proposes to control at least one hydraulic valve of a pull point of the paver depending on a levelling sensors of the levelling system by means of a control unit. Further preferred the at least one pull point is indirectly controlled.

According to the invention, the paver detection system comprises a third sensor device for measuring a relative position between the stationary part and the screed. The third sensor device is preferably mounted at a screed lift cylinder, and is particular preferred an internal length sensor that measured the movement of screed cylinder. The screed lift cylinders are usually used to lift the screed into the transport position. However, they are also used to make the screed heavier or lighter hydraulically or to fix it in a certain operating position. However, the third sensor device is alternatively preferred an external wire sensor or optical distance sensor or the like. In general, every sensor can be used as a third sensor device, which is fitted to measure the relative position or movement of the screed relative to the paver. The third sensor can be used to identify unusual movements of the paver. It can be assumed that the screed paves evenly. If movements are detected with the third sensor, the paver moves relative to the screed, which allows an assessment of the surface condition of the planum. Sudden jumps in the measurement indicate that an error has occurred. With a time delay, this will also lead to a paving error e.g. an unwanted wave could be formed into the planum. Continuous changes may also be intentional, e.g. due to curve installation or change of nominal layer thickness. Furthermore, unintended mechanical movements by the paver may show up in the sensor and thus can be detected by the sensor. Such an unintended mechanical movements occurs for example, when an asphalt filling truck couples a mechanical shock into the paver during refill, which can be usually seen with each load. It is advantageous that the sensors of the third sensor device are already used in the pavers but for different purposes.

Such a evaluation or recording of the values of the third sensor for the purpose of detecting unevenness is additional advantage and can be implemented as additional function. This also enables further control applications. The third sensor device is preferably similarly used and placed for big-ski levelling.

In general, the proposed sensors devices are used to detect the movement of the paver (tractor) to or above the planum, the position of the screed to or above planum, and the relative movement between the paver and the screed. Because the screed and the paver are mechanically connected by means of a bearing, movement of the paver also leads to movement of the screed.

The paver detection system further comprises a paver evaluation device that is coupled with the sensor device or devices, wherein the paver evaluation device is adapted to analyse the unevenness of the planum on basis of the measured relative position and the paver evaluation device is adapted to generate an alarm indicator, when a predetermined threshold value is reached indicating unevenness. The paver evaluation device can be understood as a processing unit or calculation unit. It is a technical entity, which evaluates the measured relative positions of the sensor devices. The paver evaluation device is adapted to monitor all measured relative positions of the first sensor device, second sensor device and third sensor device independent and/or simultaneously. If for example only a first sensor device with two sensor heads is used, the paver evaluation devices analyses both measured relative positions. If the first, second and third sensor device are used, each including two sensor heads, the paver evaluation device analyses each of the six sensor signals from the said sensor heads. The paver evaluation device can also be understood as an evaluation unit or processing mean. The paver evaluation device can be implemented as part of or within the control of the paver, for instance.

The analysing at least includes a comparison of a signal to a threshold value. The threshold value or a plurality of threshold values can be stored in a data storage, which is part of the paver. The threshold value can also be understood as a maximum or minimum value that can be reached by a signal that is internally processes in the paver evaluation device. Preferably, the threshold value is a maximum frequency amplitude that is determined by means of a sliding window Fourier transformation or a maximum probability value that is outputted at an output layer of a trained artificial neural network. However, the threshold value is alternatively preferred a maximum value of an unfiltered relative position signal that is measured by means of the first, second and third sensor device.

When a threshold value is reached, an alarm indicator is generated by the paver evaluation device. This alarm indicator can be displayed with a display device. The alarm indicator can also be understood as an identifier that identifies either a unique object or a unique class of objects, for instance type of unevenness.

In a preferred embodiment, the paver evaluation device includes a signal converter for generating at least one filtered amplitude signal, wherein the filtered amplitude signal is generated from at least one of the measured relative positions and wherein the filtered amplitude signal is a signal that includes amplitude data and path data of the paver. The path data can also be understood as traveled distance of the paver. The signal converter can also be understood as a transformation unit or prefilter that is used to transform the relative positions, which are measured over time into a different format. In an example, the measured relative positions are recorded as a distance change in mm over time, wherein the distance change in mm can also be understood as an amplitude. The signal converter converts this signal into an amplitude signal, which is assigned to the distance travelled by the paver.

In a preferred embodiment, the paver evaluation device is adapted to limit a or the filtered amplitude signal and/or the measured relative position by means of a first filter, wherein the first filter is configured to limit a or the filtered amplitude signal and/or the measured relative position with a total wave band filtering. The total wave band filtering can be understood as a limitation of recorded data or as a definition of the measuring interval that is analysed. It is thus proposed to identify unevenness only in a limited range manner. A wave band in the present case refers to a range of wavelengths or frequencies of unevenness in the planum. A wave band does not refer the electromagnetic pendant, e.g. known from radio technics.

The described filtering can also be understood as preprocessing of the relative position data. This way, a detrending of the relative position signals from the sensor devices can be achieved, outliners can be discarded in the signal and noise is partially suppressed outside the filtering range.

The total wave band filtering is further preferred a filtering with a wave band in a range of 0.707m to 45.248m. It is thus proposed to detect unevenness with a wavelength or frequency in this range.

Preferably, the first filter is a linear filter, in particular a butter worth filter or a zero phase filter or the like. To keep the pavement unevenness as defined in specified range, it is thus suggested that the prefiltered data are obtained by applying an Infinite Impulse Response (IIR) general bandpass filter (Butterworth 6th order), between 0.7m and 45m, to the data of the sensors.

In a further preferred embodiment, when a sliding window is used, the length of the sliding window is in a range of 1.28m to 81.92m.

In a preferred embodiment, the paver evaluation device is adapted to detect short-wave unevenness, medium-wave unevenness and long-wave unevenness by means of a second filter, wherein the second filter is configured to analyse a or the filtered amplitude signal and/or the measured relative position with a short-wave band filtering, a medium-wave band filtering and/or a long-wave band filtering. It is thus suggested that three different sensitive filters are used in order to detect three different types of waves, namely short unevenness waves with a higher frequency, medium unevenness waves with a medium frequency and long unevenness waves with a low frequency.

This second prefiltering is configurable: if the operator of the paver wants to target a special waveband where potential periodic defects are more probable, a prefiltering can be done to focus on that specific waveband. This approach supposes a prior knowledge. If it is not the case, a general approach can be pursued, relying on the three-band indicators as an unevenness index, by filtering the data into three wavebands.

In a further preferred embodiment, the short-wave band filtering is a filtering with a wave band or sliding window in a range of 0.707m to 2.828m; and/or the medium-wave band filtering is a filtering with a wave band or sliding window in a range of 2.828m to 11.312m; and/or the long-wave band, is a filtering with a wave band or a sliding window in a range of 11.312m to 45.248m. Signals outside the specific ranges are suppressed.

A sliding window is also known as window function that is zero-valued outside of a predefined interval.

It follows that each measured relative position of each sensor or sensor head of the sensor devices is analysed for occurring short-waves, medium-waves and long-waves by the paver evaluation device by applying the above described second filtering.

Preferably, the used filtering is digital forward and reverse filtering to minimize a distortion in prefiltered signals.

In a preferred embodiment, is the paver evaluation device adapted to transform a or the filtered amplitude signal and/or the measured relative position into a frequency amplitude signal by means of a Fourier transformation and the paver evaluation device is adapted to generate the alarm indicator, when a predetermined threshold value in the frequency amplitude signal is reached. It is thus suggested to transform the filtered amplitude signal or relative position by means of a Fourier Transformation in order to detect unevenness depending on the frequency amplitude of the transformed signal. If an amplitude in the frequency amplitude signal, which can also be understood as frequency spectrum, reached a predefined threshold value, the paver evaluation device generates an alarm indicator. The frequency amplitude signal can also be referred to as a transformation signal. The frequency amplitude signal is a signal that includes information about a frequency amplitude of a plurality of frequencies. The frequency amplitude signal can also be understood as frequency spectrum or amplitude spectrum.

The Fourier transformation is preferably a fast Fourier transformation and/or a sliding window Fourier transformation. This type of transformation is particularly suitable for fast processing and analyseation of the signals, because not the complete spectrum has to be calculated but only the frequency spectrum in a certain range.

In a particular preferred embodiment a sliding window Fourier transformation is used with a short-wave band filtering, a medium-wave band filtering and/or a long-wave band filtering. This way the monitored signal is analysed for three different types of waves of unevenness and short, medium and long unevenness waves can be detected. The window ranges are analogue to the mentioned short-wave, medium-wave and long-wave band filtering.

The paver detection system further comprises in a preferred embodiment, a display device that is connected to the paver evaluation device, wherein the display device is adapted to generate at least one acoustic and/or optical signal depending on the generated alarm indicator; and/or the display device is adapted to display evenness data, which is determined by means of the paver evaluation device from the measured relative position values. An acoustic signal can be understood as an acoustical noticeable signal that is generated by the display device, such as a siren or beeping. An optical signal can be understood as an optical noticeable signal that is generated by the display device, such as a blinking light or warning indication on a display of the paver. The evenness data can be understood as operating values that are shown e.g. on a display in real time. This way the operator of the paver is able to monitor the current evenness data of the sensor devices. In case a threshold value is overstepped, the operator of the paver is informed about the detected error by the alarm signal or alarm signals.

In a preferred embodiment, the paver evaluation device is adapted to generate a plurality of filtered amplitude signals, wherein for each measured relative position one filtered amplitude signal is generated and the paver evaluation device is further adapted to transform the plurality of filtered amplitude signals into a plurality of frequency amplitude signals by means of a Fourier transformation, and the paver evaluation device is adapted to generate a plurality of alarm indicators, when a predetermined threshold value of the plurality of frequency amplitude signals is reached indicating unevenness. It is thus suggested to monitor all measured relative positions and to transform each of the signal as described above. If for example six relative positions are determined, six filtered amplitude signals are created by the paver evaluation device and each of these signals is transformed by means of a Fourier transformation in order to monitor multiple unevenness's at the same time. Furthermore, it is suggested to assign each transformed amplitude signal a threshold value. Thus, a wide monitoring of unevenness is provided, since multiple frequency ranges and multiply relative positions are monitored by means of the paver evaluation device.

In a preferred embodiment, the first sensor device includes at least two sensor heads, wherein the two sensor heads of the first sensor device are arranged on opposite sides of the paver relative to a longitudinal axis of the paver, wherein the longitudinal axis extends in a direction of travel of the paver, and/or the second sensor device includes at least two sensor heads, wherein the two sensor heads of the second sensor device are arranged on opposite sides of the paver relative to a longitudinal axis of the paver, wherein the longitudinal axis extends in a direction of travel of the paver, and/or the third sensor device includes at least two sensor heads, wherein the two sensor heads of the third sensor device are arranged on opposite sides of the paver relative to a longitudinal axis of the paver, wherein the longitudinal axis extends in a direction of travel of the paver.

Thus, it is suggested to arrange the sensor devices at the left and right side of the paver, where a particularly fast and wide monitoring of unevenness is possible with six sensors. Furthermore, it is advantageous to use multiple sensor arranged as proposed, because the measured signals can be used as reference. If for example a periodic short-wave is only detected at one side of the paver, it can be assumed that the cause of the unevenness is cause on the side of the paver where the wave was detected.

In a preferred embodiment, the paver evaluation device is adapted to analyse the unevenness of the planum by means of a trained artificial neural network, wherein the artificial neural network has an input layer in which the measured relative positions are inputted as a filtered amplitude signal, wherein the filtered amplitude signal is obtained by means of a preprocessing, and wherein the artificial neural network is further adapted to output at least one unevenness value at an output layer, wherein the paver evaluation device is adapted to output an alarm indicator, when a predetermined threshold value of the at least one outputted unevenness value is reached indicating unevenness, wherein preferably at least three unevenness values are outputted at an output layer of the artificial neural network, namely an short-wave unevenness value, an medium-wave unevenness value and a long-wave unevenness value.

As a further aspect of the invention, a method for detecting unevenness of a planum with a paver detection system is proposed that comprises the steps of measuring with a first sensor device a relative position of a stationary part of a paver to the planum, wherein the first sensor device is mounted to the stationary part, and wherein the stationary part is preferably a frame of the paver or a chassis that is fixed to the frame of the paver; measuring with a second sensor device a relative position of a screed of the paver to the planum, wherein the second sensor device being mounted to the screed, and wherein the screed being movably connected to the stationary part of the paver; measuring with a third sensor device a relative position between the stationary part and the screed; and analysing with a paver evaluation device that is coupled with the sensor devices the unevenness of the planum on basis of the measured relative positions; and generating with the paver evaluation device an alarm indicator, when a predetermined threshold value is reached indicating unevenness.

The method includes the first optional step of generating with a display device that is connected to the paver evaluation device at least one acoustic and/or optical signal depending on the generated alarm indicator or the second optional step of displaying with a display device evenness data, which is determined by means of the paver evaluation device from the measured relative position values.

Preferably the analysing of the unevenness of the planum on basis of the measured relative positions includes the further steps of transforming at least one measured relative position into at least one filtered amplitude signal, transforming the at least one filtered amplitude signal into a frequency amplitude signal by means of a Fourier transformation, and generating an alarm indicator, when a predetermined threshold value of the frequency amplitude signal is reached indicating unevenness.

The detection system is preferably a paver detection system for detecting a jobsite unevenness profile of the planum, and/or a vehicle detection system for detecting a before-jobsite unevenness profile of the planum, and/or a vehicle detection system for detecting an after-jobsite unevenness profile of the planum, in particular as described above.

The classification of at least a first, second and third unevenness of the planum preferably is based on measured relative positions of a paver, wherein a first relative position is a measured relative position of a stationary part of the paver to the planum, and/or a second relative position is a measured relative position of a screed of the paver to the planum, and/or a third relative position is a measured relative position between the stationary part and the screed.

Further preferably the first unevenness is a short-wave unevenness, in particular a short-wave unevenness in a range of 0.707m to 2.828m, the second unevenness is a medium-wave unevenness, in particular a medium-wave unevenness in a range of 2.828m to 11.312m, and the third unevenness is a long-wave unevenness, in particular a long-wave unevenness in a range of 11.312m to 45.248m.

As to the advantages, preferred embodiments and details of the aspects of the invention and their preferred embodiments, reference is made to the advantages, preferred embodiments and details described herein above. In particular, the advantages, preferred embodiments and details described herein above apply, mutatis mutandis, to all aspects of the invention mentioned herein, respectively.

In particular the advantages, preferred embodiments and details described to the method for operating a paver, the paver detection system, the paver, the method for detecting unevenness of a planum with a paver detection system and/or the usage of an artificial neural network for detecting unevenness of a planum apply to each of the other further aspects of the invention and vice versa.

It is noted that the paver detection system and the method for operating a paver are not claimed as such even if they are referred to as embodiments in the remainder of the description. The scope is defined by the claims. In the figures:
- Fig. 1: shows a schematic block diagram of the method for operating a paver which is not claimed as such,
- Fig. 2: shows in an embodiment a paver detection system for detecting a jobsite unevenness profile, a vehicle detection system for detecting a before-jobsite unevenness profile, and a vehicle detection system for detecting an after-jobsite unevenness profile,
- Fig. 3: shows a method for operating a paver in which a plurality of paving parameters are shown,
- Fig. 4: shows a method for operating a paver with a vehicle detection system for detecting a before-jobsite unevenness profile of a planum in which a operation parameter or target value of a paver is determined as a paving parameter,
- Fig. 5: shows a method for operating a paver with a paver detection system for detecting a jobsite unevenness profile of a planum in which an alarm indicator is determined as a paving parameter,
- Fig. 6: shows a schematic side view of a paver detection system mounted on a paver.
- Fig. 7: shows a part of the paver as shown in Fig. 6 in a schematic perspective view,
- Figs. 7A, B: show the image section A and B as shown in figure 7 enlarged,
- Figs. 8A, B: show a schematic side view a paver detection system as shown in figure 6 with a lowered and raised screed,
- Fig. 9: shows a schematic front view of the paver detection system shown in Fig. 6, including a paver evaluation device and a display device,
- Fig. 10: shows schematic block diagram of a paver detection system,
- Fig. 10A: shows a schematic block diagram of an embodiment of a paver evaluation device using a sliding window FFT,
- Fig. 10B: shows a schematic block diagram of an embodiment of a paver evaluation device using a trained artificial neural network,

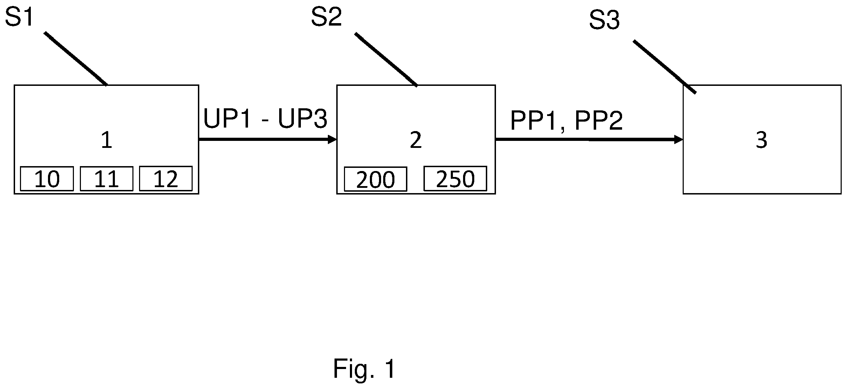

Figure 1 shows a schematic block diagram of the method for operating a paver. The method for operating a paver comprises the following steps:
The first step S1 is the step: Determining an unevenness profile UP1, UP2, UP3 of the planum by means of a detection system 1, wherein the unevenness profile UP1, UP2, UP3 comprises data describing an elevation of a planum surface within a horizontal section of the planum.

The detection system 1 is preferably a paver detection system 10 for detecting a jobsite unevenness profile UP1 of the planum, and/or a vehicle detection system 11 for detecting a before-jobsite unevenness profile UP2 of the planum, and/or a vehicle detection system 12 for detecting an after-jobsite unevenness profile UP3 of the planum. The first step can also be understood as a measuring step of the said different unevenness profiles UP1 to UP3.

The second step S2 is the step: Determining at least one paving parameter PP1 or PP2 depending on the determined unevenness profile UP1, UP2, UP3 of the planum by means of an evaluation device 2, wherein the paving parameter is a control parameter of the paver for adjusting or driving equipment of said paver. The evaluation device is preferably a paver evaluation device 200, and/or an external evaluation device 250. The second step can also be understood as an analysation step of the determined unevenness profiles UP1, UP2, UP3.

The third step S3 is the step: Operating a paver depending on the determined paving parameter PP1, PP.

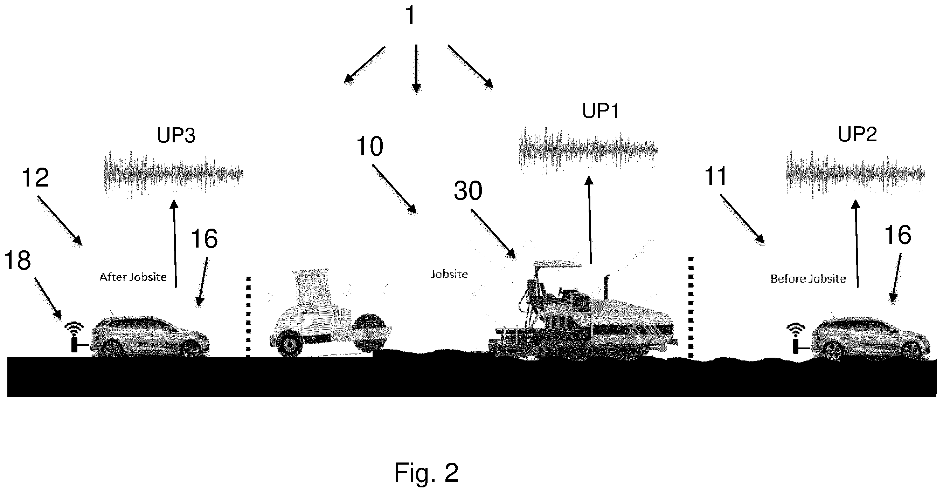

Figure 2 shows three different embodiments of the detection system 1. A first embodiment of the detection system 1 is the paver detection system 10 for detecting a jobsite unevenness profile UP1. A paver detection system is a detection system that is mounted to or arranged on the paver 30. A second embodiment of the detection system 1 is the vehicle detection system 11 for detecting a before-jobsite unevenness profile UP2. A vehicle detection system is a detection system that is mounted to or arranged on a measuring vehicle 16. A third embodiment of the detection system 1 is the vehicle detection system 12 for detecting an after-jobsite unevenness profile UP3.

The measuring vehicles 16 both include a transmission interface for transmission the determined unevenness profile UP1, UP3 over a transmission network. Furthermore figure 2 shows that UP1 to UP3 are determined as a amplitude signal over time.

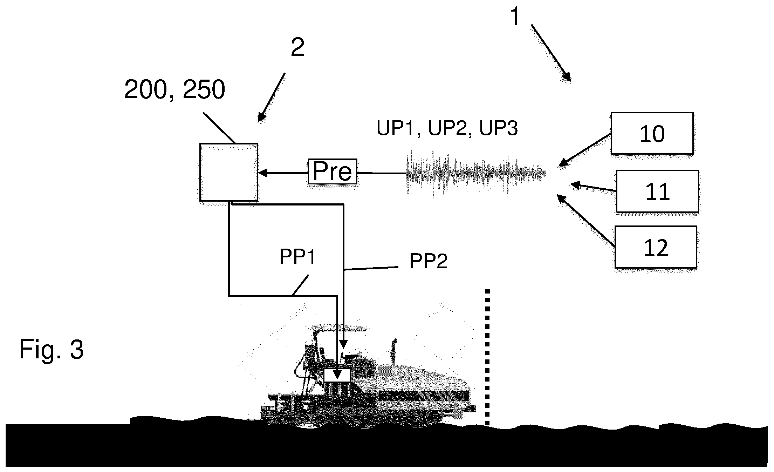

Figure 3 shows in an embodiment a method for operating a paver in which a plurality of paving parameters PP1 and PP2 are shown. Figure 3 shows in general the steps of the blocks S1 to S3, namely Determining S1 an unevenness profile UP1, UP2, UP3 of a planum by means of a detection system 1, wherein the detection system is preferably a paver detection system 10 for detecting a jobsite unevenness profile UP1 of the planum, and/or a vehicle detection system 11 for detecting a before-jobsite unevenness profile UP2 of the planum, and/or a vehicle detection system 12 for detecting an after-jobsite unevenness profile UP3 of the planum, as shown for instance in figure 2. Figure 3 also shows determining S2 at least one paving parameter PP1 and/or PP2 depending on the determined unevenness profile UP1, UP2, UP3 of the planum by means of an evaluation device 2, wherein the evaluation device 2 is preferably a paver evaluation device 200, and/or an external evaluation device 250.

Figure 3 also shows that the step determining at least one paving parameter additionally includes the further step of pre-processing Pre the determined unevenness profile UP1, UP2, UP3 into a reduced and transformed format with the block Pre, and to processing the reduced and transformed unevenness profile UP1, UP2, UP3 in the evaluation device 2. The result of the evaluation with the evaluation device 2 are the paving parameters PP1 and/or PP2, which are used for operating a paver depending on the determined paving parameter.

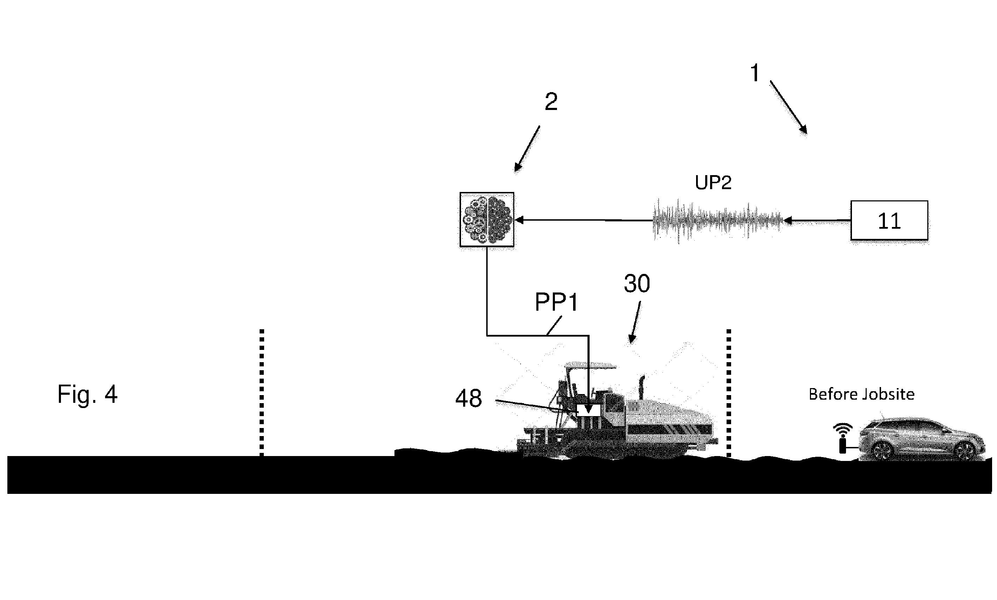

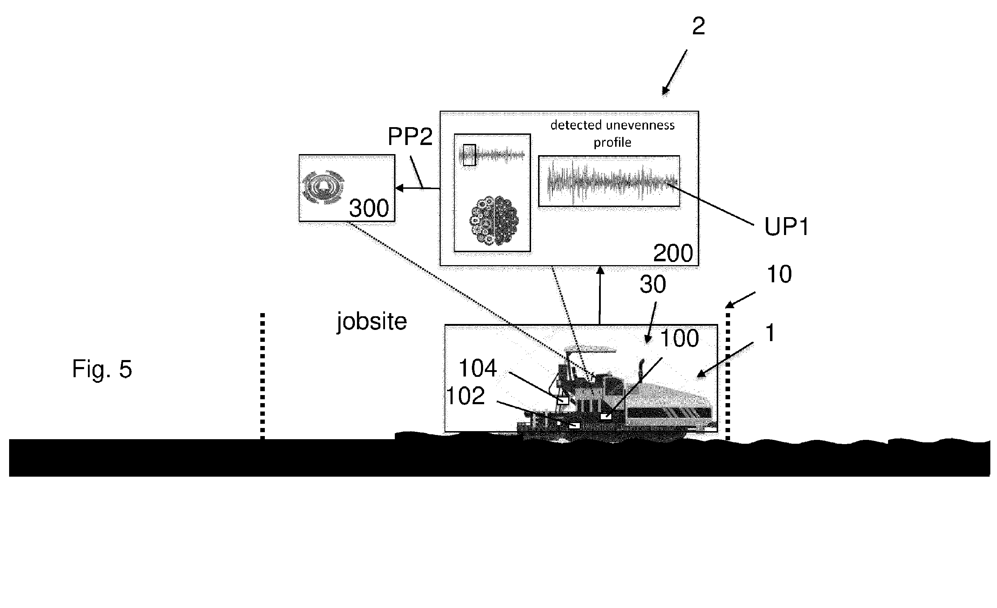

Figure 4 shows in an embodiment a method for operating a paver with a vehicle detection system 11 for detecting a before-jobsite unevenness profile UP2 of a planum in which an operation parameter or target value of the paver 30 is determined by means of the evaluation unit 2. The operation parameter or target value is in particular a driving velocity of the paver 30, an angle of attack of a screed of a paver 30, a contact pressure of a screed of a paver 30, or the like. Figure 4 shows that the determined paving parameter PP1 is incorporated in a control or processing unit of the paver 30 which is indicated with the block 48. Figure 5 shows in an embodiment a method for operating a paver with a paver detection system 10 for detecting a jobsite unevenness profile UP1 of a planum in which an alarm indicator PP2 is determined. The paver detection system includes three sensor devices 100, 102 and 104 which are arranged on the paver 30. The detection system 1 is thus a paver detection system 10. The paver evaluation device 200 in figure 5 is part of or implemented in paver 30, which is indicated with the dotted line. The paver detection system 10 is suitable for monitoring unevenness of a planum, wherein the paver detection system 10 comprises a first, a second and a third sensor device 100. The sensor devices 100, 102 and 104 are shown for example in the following figures in more detail. The paver evaluation device 200 is coupled with the sensor devices 100, 102, 104, wherein the paver evaluation device is adapted to analyse the unevenness of the planum on basis of the measured relative position d₁, d₂, d₃ and the paver evaluation device is adapted to generate an alarm indicator A₁, A₂, A₃, which are paving parameters PP2, when a predetermined threshold value s₁, s₂, s₃ is reached indicating unevenness.

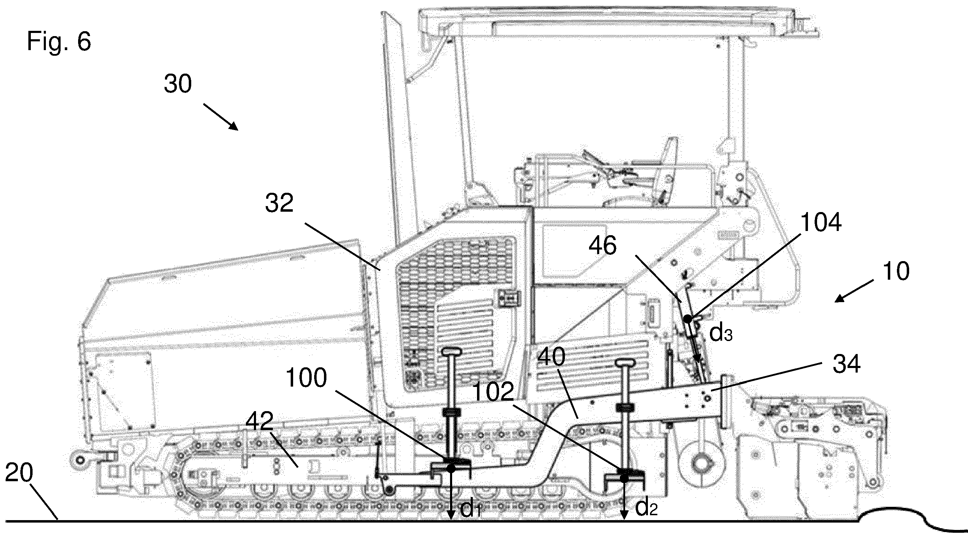

Fig. 6 shows a paver detection system 10 mounted on a paver 30. The paver 30 is a chain-driven paver.

The paver detection system 10 is provided for monitoring unevenness of the planum 20.

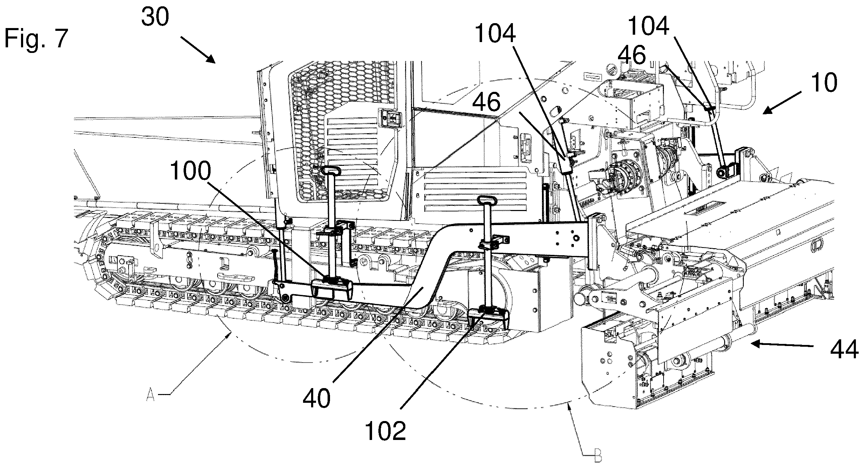

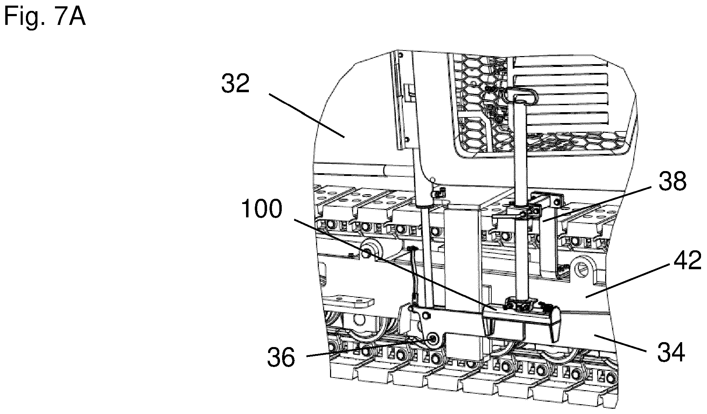

The paver detection system 10 comprises a first sensor device 100 for measuring a relative position d₁ of a stationary part 32, namely the chassis 42 of the paver 30 to the planum 20. The first sensor device 100 is mounted to the chassis 42 by means of mounting in order to fix the first sensor device 100 to the chassis of the paver 30. The chassis is fixed connected to the frame of the paver 30. The mounting of the first sensor device 100 is shown for example in figure 7A in more detail.

On an even and ideal planum, the sensor 100 would always indicate the same height. However, the sensor device 100 is suitable to detect dents and waves that are transverse to the direction of travel, which can be bridged by the chain-drive. Therefore, the sensor 100 is suitable to detect to measure e.g. smaller holes in the planum. In the case of humps (short elevations), a different behavior between wheeled and chain-driven pavers is present. Wheeled pavers are able to pass over humps due to the independent suspension of the front wheels and the soft rear wheels. A sensor on a wheel-driven paver would not detect a change in height if the hump is in the paver track but not in the sensor track. In the case of chain-driven pavers, which do not have sprung chassis, a hump will cause the paver to be lifted. Furthermore, chain-driven pavers are also known using sprung solid rubber high-speed chains. When such a chain-driven paver passes the hump, the pull point is raised, which inevitably leads to an influence of the screed. Because of the inertia of the screed, cause and effect do not always have to be spatially equal to each other, depending on paving speed, geometry, material, etc. Humps also include "adhesions to undercarriage chains or wheels". Thus, with the sensor devices, in particular with the sensor device 100, periodic humps can be detected indicating an adhesion to chains or wheel.

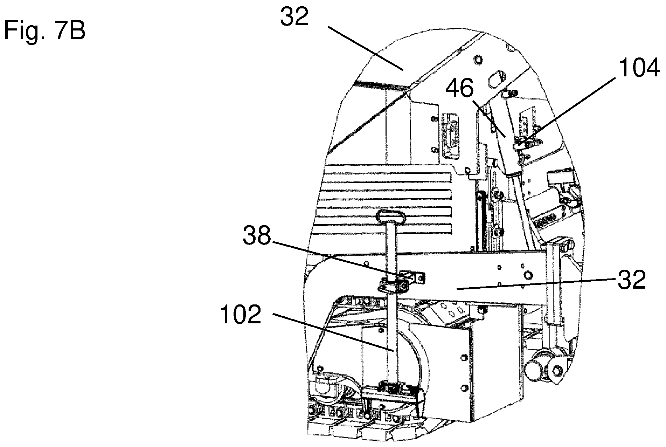

A second sensor device 102 for measuring a relative position d₂ of a screed 32 of the paver 30 to the planum 20 is mounted to the screed 34, wherein the screed 34 is movably connected to the chassis 32 of the paver 30. The screed 34 is connected with the chassis by means of a bearing 36, which is shown for example in figure 7B in more detail. The second sensor device 102 is located on the traction arm 40 at a height of the chassis 42 of the paver. The sensor 102 is placed close to the paver. The mounting of the second sensor device 102 is shown for example in figure 7B in more detail.

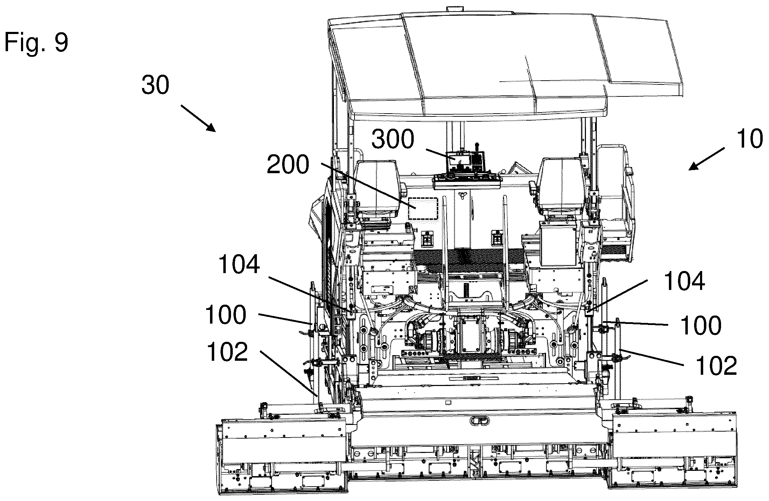

A third sensor device 104 for measuring a relative position d₃ between the stationary part 32 and the screed 34 is also provided. In the showed embodiment of figure 6 the third sensor device 104 is being mounted at the screed lift cylinder 46. The sensor 104 is an internal length sensor that measures the movement of screed cylinder 46. This way the relative movement between the screed 34 and the stationary part 32 of the paver 30 is measured. The cylinders 46 are usually used to lift the screed into the transport position but they are also used to hydraulically make the screed heavier or lighter or to fix it in a certain position. The mounting of the third sensor device 104 is shown for example in figure 9B in more detail.

The paver detection system 10 of the paver 30 further comprises a paver evaluation device 200 that is coupled with the sensor devices 100, 102, 104, which is not shown in figure 6 but in figure 9 as an example, wherein the paver evaluation device 200 is adapted to analyse the unevenness of the planum on basis of the measured relative positions d₁, d₂, d₃.

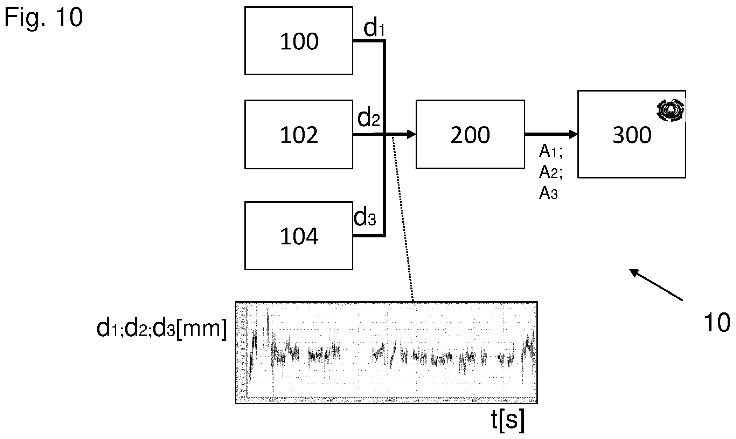

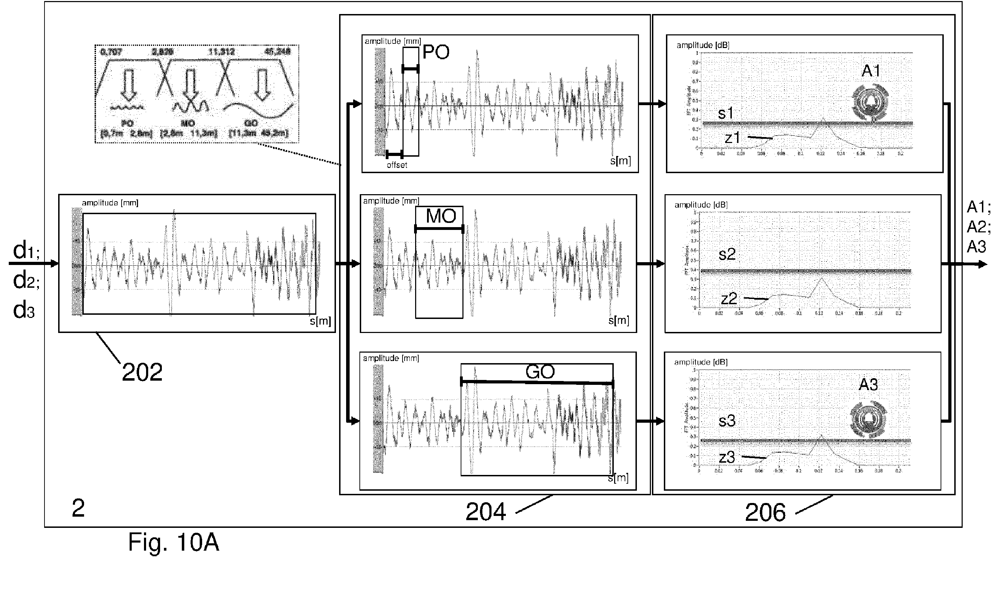

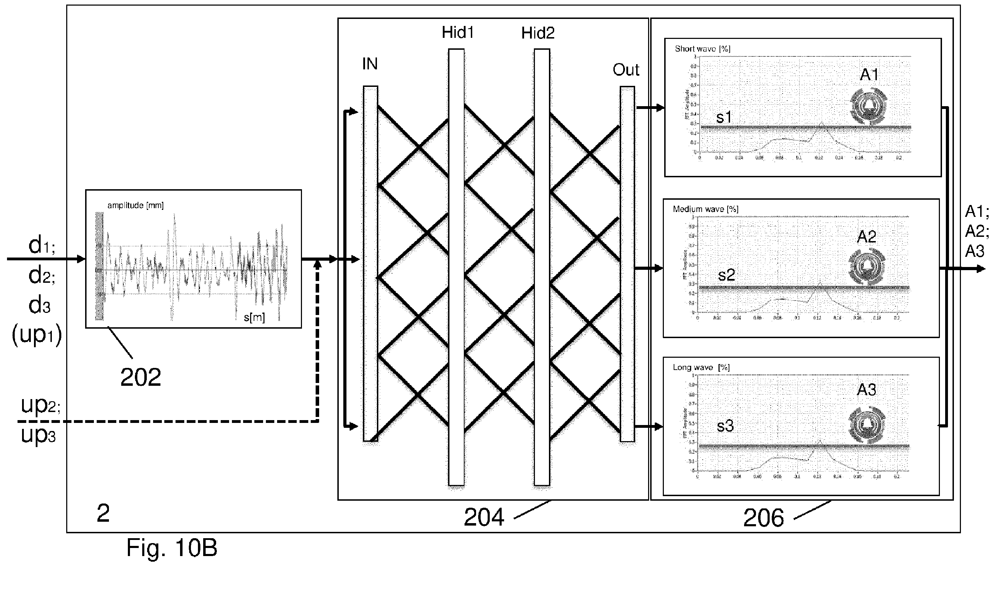

Furthermore, the paver evaluation device 200 is adapted to generate an alarm indicator A₁, A₂, A₃, when a predetermined threshold value s₁, s₂, s₃ is reached indicating unevenness, which is shown for example in figure 10, 10A and 10B in more detail.

Figure 7 shows a part of the paver 30 and the paver detection system 100 as showed in figure 6 in a perspective view. Compared to figure 6 the mounting of the first sensor device 100 and the second sensor device 102 can be seen in more detail. Furthermore, it can be seen that the third sensor device 104 includes two sensors heads at a first and second screed lift cylinder 46.

A levelling system 44 is attached at the lateral end of the screed.

Figs. 7A, B show the image section A and B enlarged as shown in figure 7.

Figure 7A shows that the first sensor device 100 is mounted to the chassis 42, which is a stationary part 32 of the paver 30 by means of a fixing 38. When the chassis 42 of the chain-driven paver moves the first sensor device 100 also moves. Figure 7A also shows that the screed 34, respectively the traction arm 40 of the screed is movable mounted to the stationary part 32 by means of a bearing 36.

Figure 7B shows that the second sensor device 102 is mounted to the screed 32 of the paver 30 by means of a fixing 38. When the movable screed 34 of the paver 30 moves, the second sensor device 102 also moves. Figure 7B also shows a third sensor device 104 that as mounted at the screed cylinder 46, wherein the third sensor device 104 is used to detect the relative position or movement between the screed 32 and the stationary part 32 of the paver 30.

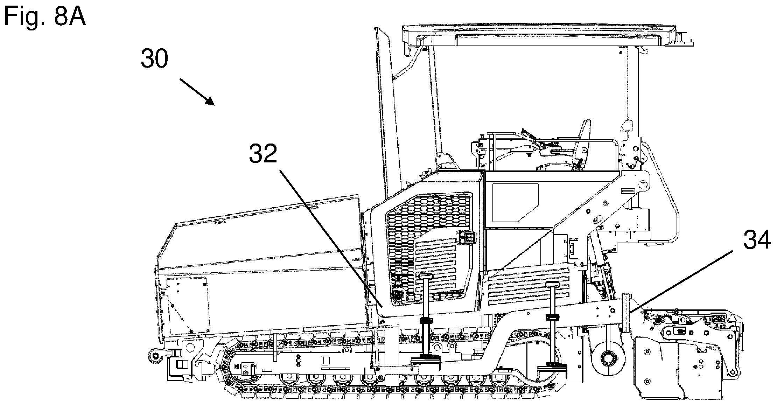

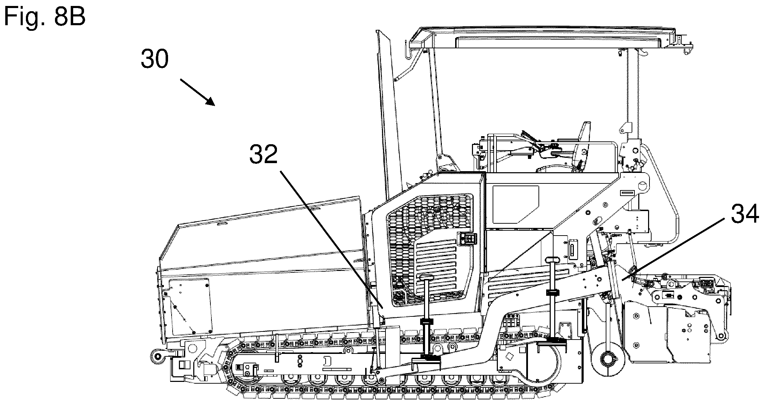

Figures 8A, B show a schematic side view of the embodiment of a paver detection system as shown in figure 6 with a lowered and raised screed 34. In figure 8A, the screed 34 is lowered to the planum into a work position. In figure 8B, the screed 34 is raised into a transport position.

Figure 9 shows a schematic front view of the embodiment of the paver detection system shown in figure 6, including a paver evaluation device 200 and a display device 300. Compared the previous figures 6 to 8, figure 9 shows that the first sensor device 100, the second sensor device 102 and the third sensor device 104 each include two sensor heads. The two sensor heads of the first, second and third sensor devices 100, 102 and 104 are arranged in pairs on opposite sides of the paver 30 relative to a longitudinal axis of the paver 30, wherein the longitudinal axis extends in a direction of travel of the paver. It is thus suggested to use six sensor heads in order to detect unevenness in the planum.

The paver evaluation device 200 is implemented in the control of the paver 30, which is indicated, with a dashed rectangle in figure 11. The paver evaluation device 200 is coupled with all sensor devices 100, 102 and 104 by means of data lines and is suitable to analyse the relative position data of the sensor devices 100, 102 and 104 by means of an analysing process, which is shown as an example in figure 10, 10A or 10B. The analysing process can also be referred to as algorithm or program that is implemented in the paver evaluation device.

The paver evaluation device 200 is adapted to monitor all measured relative positions of the sensor devices 100, 102 and 104 independent and simultaneously and to trigger an alarm indicator A₁, A₂, A₃ for each sensor device and/or for different wavelengths. That means that the measured relative position of each sensor head is monitored by the paver evaluation device 100 for different wavelength ranges in order to detect short-waves, medium-waves and long-waves. In order to detect the different wavelengths from the measured relative position a short-wave band filtering, a medium-wave band filtering and/or a long-wave band filtering is applied with or in the paver evaluation device 200, which is explained as an example to figure 10, 10A or 10B in more detail. It follows that each measured relative position of each sensor head of the sensor devices 100, 102 and 104 is analysed for occurring short-waves, medium-waves and long-waves by the paver evaluation device 200. It follows that with six sensor heads as shown in figure 9, in total 18 different alarm indicators can be generated.

The paver detection system 10 as shown in figure 9 also includes a display device 300, which is coupled with the paver evaluation device 200 by means of a data line. The display device 300 is used to output optical alarm signals at the display of the display device 300 e.g. by means of a blinking on the display. The display device 300 is also suitable to generate acoustical alarms and to display evenness data, which can be understood as real time data.

This way a real time detection and indicator of unevenness during the paving process for the paver operator is provided. If for example a short-wave is indicated at the display device 300, the operator of the paver is able to check whether an adhesion is present at the chain-drive or if an unwanted hole was paved into the planum during the paving process. The hole can be filled directly on site. If for example a long wave is detected, the operator can change the current paving parameters of the paver and the screed.

Figure 10 shows a block diagram of an embodiment of a paver detection system 10 that can be part of the paver 30 as shown in figures 6 to 9. The paver detection system 10 comprises a first sensor device 100 for measuring a relative position d₁ of a stationary part of a paver to the planum, wherein the first sensor device 100 is mounted to the stationary part.

The paver detection system 10 further comprises a second sensor device 102 for measuring a relative position d₂ of a screed of the paver to the planum, wherein the second sensor device 102 being mounted to the screed, and wherein the screed being movably connected to the stationary part of the paver.

The paver detection system 10 further comprises a third sensor device 104 for measuring a relative position d₃ between the stationary part and the screed.

The paver is for example the paver 30 as shown in figures 6 to 8, including the stationary part 32 and the screed 34. The showed embodiment of figure 10 therefore includes three sensor devices 100, 102 and 104.

The relative positions d₁ to d₃ are measured as a time signal. As can be seen in figure 10, d₁ to d₃ is an amplitude signal in millimeter [mm] that is measured over time t in seconds [s]. It follows that the respective distance change of each sensor device 100, 102 and 104 is measured. It follows that in case of the first sensor device 100 the distance change or movement between the stationary part and the planum is measured. In case of the second sensor device 102 the distance change or movement between the screed and the planum is measured. In case of the third sensor device 104 the distance change or movement between the stationary part and the screed of paver is measured.

The paver evaluation device 200 is coupled with the sensor device 100, 102, 104, wherein the paver evaluation device is adapted to analyse the unevenness of the planum on basis of the measured relative position d₁, d₂, d₃. Each of the measured relative positions d₁ to d₃ are inputted into the paver evaluation device 200 that performs an analysing process of the relative positions in order to detect unevenness. A first embodiment of the analysing process of the paver evaluation device 200 is shown for example in figure 10A using a sliding window fast Fourier transform (FFT). A second embodiment of the analysing process of the paver evaluation device 200 is shown for example in figure 10B using a trained artificial neural network.

Furthermore, the paver evaluation device 200 is adapted to generate an alarm indicator A₁, A₂ or A₃ when a predetermined threshold value s₁, s₂ or s₃ is reached, indicating unevenness. The alarm indicator indicates unevenness. For this purpose, threshold values can be stored in a databank.

The generated alarm indicator A₁, A₂ or A₃ is provided to a display device 300 that is connected to the paver evaluation device 200, wherein the display device 300 is adapted to generate at least one acoustic and/or optical signal depending on the generated alarm indicators A1, A2 and A3.

Figure 10A shows a schematic block diagram of an embodiment of a paver evaluation device 200 that uses a sliding window fast Fourier transform in order to detect and indicate unevenness of the planum. The measured relative position d₁, d₂ or d₃ is received by the paver evaluation device 200 from a measuring device 100, 102 or 104.

The paver evaluation device 200 includes a signal converter 202 for generating at least one filtered amplitude signal, wherein the filtered amplitude signal is generated from at least one of the measured relative positions d₁, d₂, and d3. The filtered amplitude signal is a signal that includes amplitude data and path data of the paver. The relative position, which is recorded as a time signal, is thus converted into a path or distance signal. The signal converter 202 can also be understood as a first filter or pre-processing that transform the relative position into said filtered amplitude signal.

The filtered amplitude signal is limited by means of a first filter to a certain window by applying a total wave band filtering to the filtered amplitude signal. The total wave band filtering is a filtering with a wave band in a range of 0.707m to 45.248m. As a filter, a linear filter is used. Therefore, it is suggested to detect distal waves only within the window range of 0.707m to 45.248m.

The paver evaluation device 200 is further adapted to detect short-wave unevenness, medium-wave unevenness and long-wave unevenness by means of a second filter 204, wherein the second filter 204 is configured to analyse the filtered amplitude signal with a short-wave band filtering, a medium-wave band filtering and a long-wave band filtering. The short-wave band filtering is a filtering with a wave band or sliding window in a range of 0.707m to 2.828m. The medium-wave band filtering is a filtering with a wave band or sliding window in a range of 2.828m to 11.312m. The long-wave band filtering is a filtering with a wave band or a sliding window in a range of 11.312m to 45.248m. This way for each measured position d₁, d₂ or d₃ three different types of waves can be detected. It is thus suggested to detect short-waves, medium-waves and long-waves in the planum by means of three different filters with three different window sizes parallel.

As can be seen in figure 10A the sliding windows PO, MO and GO have a different window length and/or a different window position.

The paver evaluation device 200 is further adapted to transform the filtered amplitude signal into a frequency amplitude signal z₁, z₂ and z₃ by means of a Fourier transformation, namely with a sliding window Fourier transform. This step is indicated with the block 206, which can be understood as a transformation block. The sliding window Fourier transform with the showed windows PO, MO and GP can be understand as a short-wave band filtering PO, a medium-wave band filtering MO and a long-wave band filtering GO.

The paver evaluation device 200 is also adapted to generate at least one alarm indicator A₁, A₂, A₃, when a predetermined threshold value s₁, s₂, s₃ in the frequency amplitude signal z₁, z₂ or z₃ is reached.

As said before, a sliding window Fourier transform of the filtered amplitude signal with three different sliding windows is performed. This way three different frequency amplitude signal z₁, z₂ and z₃ are determined as shown in block 206.

When for example the threshold value s₁ is reached, because a detected frequency amplitude value of the frequency amplitude signal z₁ reaches the amplitude threshold value s₁, the paver evaluation device generates a signal indicator A₁ to give an example. This indicator can be provided to a display device 300 in order to indicate a detected short-wave.

Figure 10B shows a schematic block diagram of an embodiment of a paver evaluation device 200 that uses using an artificial neural network in order to detect unevenness of planum.

The evaluation device 2 or 200 includes at least one trained artificial neural network, wherein the trained artificial neural network is adapted to process at least the determined unevenness profile UP1 in an input layer IN, to process the unevenness profile in a plurality of hidden layers Hid1, Hid2, and to output the at least one paving parameter at an output layer Out, namely three probability values for an detected unevenness.

Figure 10B also shows that in addition to the determined unevenness profile UP1 the determined unevenness profile UP2 and UP3 can also be inputted into the neural network in the block 204. The block 202 can be understood as a pre-processing. In case the probability value reaches a threshold value s₁, s₂, s₂ an alarm indicator A₁ to A₃ is triggered.

However, it is understood that the embodiments of figure 10, 10A and 10B can be performed with single sensor devices only or with multiple sensor devices, depending on how many sensor devices are used in the application.

### Reference list

- 1: detection system
- 2: evaluation device
- 10: paver detection system
- 12, 14: vehicle detection system
- 16: measuring vehicle
- 18: transmission interface
- 20: planum
- 30: paver
- 32: stationary part
- 34: screed
- 36: bearing
- 38: fixing
- 40: traction arm
- 42: chassis
- 44: levelling system
- 46: screed cylinder
- 48: control unit or processing unit
- 100, 102, 104: sensor device
- 200: paver evaluation device
- 202,204: filter
- 206: filtering windows
- 250: external evaluation device
- 300: display device
- d₁, d₂, d₃: relative position
- DISP: Display
- Pre: Pre-Processing

## Claims

1. Paver (30) with a frame, wherein a screed is movably mounted to the frame, wherein the paver includes a paver detection system (10) for real-time detection of unevenness of a planum, wherein the paver detection system comprises:
- a first sensor device (100) for measuring a relative position (d₁) of a stationary part (32) of the paver (30) to the planum, wherein the first sensor device is mounted to the stationary part, and wherein the stationary part is preferably the frame of the paver or a chassis that is fixed to the frame of the paver, and
- a second sensor device (102) for measuring a relative position (d₂) of the screed (34) of the paver (30) to the planum, wherein the second sensor device is mounted to the screed, and wherein the screed being movably connected to the stationary part of the paver, and
- a third sensor device (104) for measuring a relative position (d₃) between the stationary part (32) and the screed (34); and
- a paver evaluation device (200) that is coupled with the sensor devices (100, 102, 104), wherein the paver evaluation device is adapted to analyse the unevenness of the planum on basis of the measured relative positions (d₁, d₂, d₃) and the paver evaluation device is adapted to generate an alarm indicator (A₁, A₂, A₃), when a predetermined threshold value (s₁, s₂, s₃) is reached indicating unevenness.

2. Paver (30) according to the preceding claim, wherein the evaluation device (2, 200, 250) includes a signal converter (202) for generating at least one filtered amplitude signal, wherein the filtered amplitude signal is generated from at least one of the measured relative positions (d₁, d₂, d₃) and wherein the filtered amplitude signal is a signal that includes amplitude data and path data of the paver.

3. Paver (30) according to one of the preceding claims, wherein the evaluation device (2, 200,250) is adapted to limit a or the filtered amplitude signal and/or the measured relative position by means of a first filter (202), wherein the first filter is configured to limit a or the filtered amplitude signal and/or the measured relative position with a total wave band filtering,
wherein preferably the total wave band filtering is a filtering with a wave band in a range of 0.707m to 45.248m, and wherein
preferably the first filter is a linear filter, in particular a Butterworth filter or a zero phase filter.

4. Paver (30) according to one of the preceding claims, wherein the evaluation device (2, 200, 250) is adapted to detect short-wave unevenness, medium-wave unevenness and long-wave unevenness by means of a second filter (204), wherein the second filter is configured to analyse a or the filtered amplitude signal and/or the measured relative position with a short-wave band filtering, a medium-wave band filtering and/or a long-wave band filtering, wherein preferably
the short-wave band filtering is a filtering with a wave band or sliding window in a range of 0.707m to 2.828m; and/or the medium-wave band filtering is a filtering with a wave band or sliding window in a range of 2.828m to 11.312m; and/or the long-wave band, is a filtering with a wave band or a sliding window in a range of 11.312m to 45.248m.

5. Paver (30) according to one of the preceding claims, wherein the evaluation device (2, 200, 250) is adapted to transform a or the filtered amplitude and/or the measured relative position signal into a frequency amplitude signal by means of a Fourier transformation and wherein the evaluation device (200) is adapted to generate the alarm indicator (A1, A2, A3), when a predetermined threshold value (s₁, s₂, s₃) in frequency amplitude signal is reached, wherein the Fourier transformation is preferably a sliding window Fourier transform, in particular sliding window Fourier transform using a short-wave band filtering (PO), a medium-wave band filtering (MO) or a long-wave band filtering (GO).

6. Paver (30) according to one of the preceding claims, wherein the paver (10) further comprises a display device (300) that is connected to the evaluation device (2, 200, 250), wherein the display device (300) is adapted to generate at least one acoustic and/or optical signal depending on the generated alarm indicator (A1;A2;A3); and/or
the display device (300) is adapted to display evenness data, which is determined by means of the paver evaluation device (200) from the measured relative position values (d₁, d2, d3).

7. Paver (30) according to one of the preceding claims, wherein the evaluation device (2, 200, 250) is adapted to generate a plurality of filtered amplitude signals, wherein for each measured relative position (d₁, d₂, d₃) one filtered amplitude signal is generated and
the evaluation device (2, 200, 250) is further adapted to transform the plurality of filtered amplitude signals into a plurality of frequency amplitude signals by means of a Fourier transformation, and
the evaluation device (2, 200, 250) is adapted to generate a plurality of alarm indicators (A1, A2, A3), when a predetermined threshold value (s₁, s₂, _{S3}) of the plurality of frequency amplitude signals is reached indicating unevenness.

8. Paver (30) according to one of the preceding claims, wherein the first sensor device (100) includes at least two sensor heads, wherein the two sensor heads of the first sensor device are arranged on opposite sides of the paver relative to a longitudinal axis of the paver, wherein the longitudinal axis extends in a direction of travel of the paver, and/or
the second sensor (102) device includes at least two sensor heads, wherein the two sensor heads of the second sensor device are arranged on opposite sides of the paver relative to a longitudinal axis of the paver, wherein the longitudinal axis extends in a direction of travel of the paver, and/or
the third sensor device (104) includes at least two sensor heads, wherein the two sensor heads of the third sensor device are arranged on opposite sides of the paver relative to a longitudinal axis of the paver, wherein the longitudinal axis extends in a direction of travel of the paver.

9. Paver (30) according to one of the preceding claims, wherein the evaluation device (2, 200, 250) is adapted to analyse the unevenness of the planum by means of a trained artificial neural network, wherein the artificial neural network has an input layer in which the measured relative positions (d₁, d₂, d₃) are inputted as a filtered amplitude signal, wherein the filtered amplitude signal is obtained by means of a preprocessing, and wherein the artificial neural network is further adapted to output at least one unevenness value at an output layer, wherein the evaluation device (2, 200, 250) is adapted to output an alarm indicator (A1, A2, A3), when a predetermined threshold value (s₁, s₂, s₃) of the at least one outputted unevenness value is reached indicating unevenness, wherein preferably at least three unevenness values are outputted at an output layer of the artificial neural network, namely a short-wave unevenness value, a medium-wave unevenness value and a long-wave unevenness value.

10. Method for real-time detecting unevenness of a planum with a paver detection system, comprising the steps of:
- measuring with a first sensor device (100) a relative position (d₁) of a stationary part (32) of a paver (30) to the planum, wherein the first sensor device is mounted to the stationary part, and wherein the stationary part is preferably a frame of the paver or a chassis that is fixed to the frame of the paver;
- measuring with a second sensor device (102) a relative position (d₂) of a screed (32) of the paver (30) to the planum, wherein the second sensor device is mounted to the screed, and wherein the screed being movably connected to the stationary part of the paver;
- measuring with a third sensor device (104) a relative position (d₃) between the stationary part (32) and the screed (32); and
- analysing with a paver evaluation device (200) that is coupled with the sensor devices (100, 102, 104) the unevenness of the planum on basis of the measured relative positions (d₁, d₂, d₃); and
- generating with the paver evaluation device an alarm indicator (A1, A2, A3), when a predetermined threshold value (s₁, s₂, s₃) is reached indicating unevenness;
- optional generating with a display device (300) that is connected to the paver evaluation device (200) at least one acoustic and/or optical signal depending on the generated alarm indicator (A1; A2; A3); or
- optional displaying with a display device (300) evenness data, which is determined by means of the paver evaluation device (200) from the measured relative position values (d1,d2,d3).

11. Method according to claim 10, wherein analysing the unevenness of the planum on basis of the measured relative positions (d₁, d₂, d₃) includes the further steps:
- transforming at least one measured relative position (d₁, d₂, d₃) into at least one filtered amplitude signal, preferably transforming all measured relative positions into a plurality of filtered amplitude signals;
- transforming the at least one filtered amplitude signal into a frequency amplitude signal by means of a Fourier transformation, preferably a sliding window Fourier transformation, in particular a sliding window Fourier transformation which includes a short-wave sliding window in a range of 0.707m to 2.828m, a medium-wave sliding window in a range of 2.828m to 11.312m, and a long-wave sliding window with a range of 11.312m to 45.248m; and
- generating an alarm indicator (A1, A2, A3), when a predetermined threshold value (s₁, s₂, s₃) of the frequency amplitude signal is reached indicating unevenness.

12. Method according to claim 10, wherein an artificial neural network is used for real-time detecting unevenness of a planum, wherein the artificial neural network is configured for classification of at least a first, a second and/or a third unevenness of a planum based on an unevenness profile of the planum, wherein the unevenness profile is determined by means of a paver detection system (10) for detecting a jobsite unevenness profile of the planum (UP1), for real-time detection of unevenness of a planum, wherein the paver detection system comprises:
- a first sensor device (100) for measuring a relative position (d₁) of the stationary part (32) of the paver (30) to the planum, wherein the first sensor device is mounted to the stationary part, and wherein the stationary part is preferably a frame of the paver or a chassis that is fixed to the frame of the paver, and
- a second sensor device (102) for measuring a relative position (d₂) of the screed (34) of the paver (30) to the planum, wherein the second sensor device being mounted to the screed, and wherein the screed being movably connected to the stationary part of the paver, and
- a third sensor device (104) for measuring a relative position (d₃) between the stationary part (32) and the screed (34); and
- a paver evaluation device (200) that is coupled with the sensor device (100, 102, 104), wherein the paver evaluation device is adapted to analyse the unevenness of the planum on basis of the measured relative position (d₁, d₂, d₃) and the paver evaluation device is adapted to generate an alarm indicator (A₁, A₂, A₃), when a predetermined threshold value (s₁, s₂, s₃) is reached indicating unevenness.

13. Method according to claim 12, wherein the classification of at least a first, second and third unevenness of the planum is based on measured relative positions of a paver, wherein
- a first relative position is a measured relative position of a stationary part of the paver to the planum, and/or
- a second relative position is a measured relative position of a screed of the paver to the planum, and/or
- a third relative position is a measured relative position between the stationary part and the screed, and preferably
- the first unevenness is a short-wave unevenness, in particular a short-wave unevenness in a range of 0.707 m to 2.828 m,
- the second unevenness is a medium-wave unevenness, in particular a medium-wave unevenness in a range of 2.828 m to 11.312 m, and
- the third unevenness is a long-wave unevenness, in particular a long-wave unevenness in a range of 11.312 m to 45.248 m.

## Patentansprüche

1. Straßenfertiger (30) mit einem Rahmen, wobei eine Bohle beweglich an dem Rahmen gelagert ist, wobei der Straßenfertiger ein Straßenfertiger-Erfassungssystem (10) zur Echtzeiterfassung von Unebenheit eines Planums umfasst, wobei das Straßenfertiger-Erfassungssystem umfasst:
- eine erste Sensorvorrichtung (100) zum Messen einer relativen Position (d1) eines stationären Teils (32) des Straßenfertigers (30) zum Planum, wobei die erste Sensorvorrichtung an dem stationären Teil angebracht ist, und wobei der stationäre Teil bevorzugt der Rahmen des Straßenfertigers oder ein Chassis ist, das an dem Rahmen des Straßenfertigers befestigt ist, und
- eine zweite Sensorvorrichtung (102) zum Messen einer relativen Position (d2) der Bohle (34) des Straßenfertigers (30) zum Planum, wobei die zweite Sensorvorrichtung an der Bohle angebracht ist, und wobei die Bohle beweglich mit dem stationären Teil des Straßenfertigers verbunden ist, und
- eine dritte Sensorvorrichtung (104) zum Messen einer relativen Position (d3) zwischen dem stationären Teil (32) und der Bohle (34); und
- eine Straßenfertiger-Auswertevorrichtung (200), die mit den Sensorvorrichtungen (100, 102, 104) gekoppelt ist, wobei die Straßenfertiger-Auswertevorrichtung dazu ausgebildet ist, die Unebenheit des Planums auf Basis der gemessenen relativen Positionen (d1, d2, d3) zu analysieren, und die Straßenfertiger-Auswertevorrichtung dazu ausgebildet ist, einen Alarmindikator (A1, A2, A3) zu erzeugen, wenn ein vorbestimmter Schwellenwert (s1, s2, s3) erreicht ist, der eine Unebenheit anzeigt.

2. Straßenfertiger (30) nach dem vorhergehenden Anspruch, wobei die Auswertevorrichtung (2, 200, 250) einen Signalwandler (202) zum Erzeugen mindestens eines gefilterten Amplitudensignals umfasst, wobei das gefilterte Amplitudensignal aus mindestens einer der gemessenen relativen Positionen (d1, d2, d3) erzeugt wird und wobei das gefilterte Amplitudensignal ein Signal ist, das Amplitudendaten und Wegdaten des Straßenfertigers umfasst.

3. Straßenfertiger (30) nach einem der vorhergehenden Ansprüche, wobei die Auswertevorrichtung (2, 200, 250) dazu ausgebildet ist, ein oder das gefilterte Amplitudensignal und/oder die gemessene relative Position mittels eines ersten Filters (202) zu begrenzen, wobei der erste Filter dazu ausgebildet ist, ein oder das gefilterte Amplitudensignal und/oder die gemessene relative Position mit einer Gesamtwellenbandfilterung zu begrenzen,
wobei die Gesamtwellenbandfilterung bevorzugt eine Filterung mit einem Wellenband im Bereich von 0,707 m bis 45,248 m ist, und wobei
der erste Filter bevorzugt ein linearer Filter ist, insbesondere ein Butterworth-Filter oder ein Nullphasenfilter.

4. Straßenfertiger (30) nach einem der vorhergehenden Ansprüche, wobei die Auswertevorrichtung (2, 200, 250) dazu ausgebildet ist, kurzwellige Unebenheit, mittelwellige Unebenheit und langwellige Unebenheit mittels eines zweiten Filters (204) zu erfassen, wobei der zweite Filter dazu ausgebildet ist, ein oder das gefilterte Amplitudensignal und/oder die gemessene relative Position mit einer Kurzwellenbandfilterung, einer Mittelwellenbandfilterung und/oder einer Langwellenbandfilterung zu analysieren, wobei bevorzugt
die Kurzwellenbandfilterung eine Filterung mit einem Wellenband oder gleitenden Fenster im Bereich von 0,707 m bis 2,828 m ist; und/oder die Mittelwellenbandfilterung eine Filterung mit einem Wellenband oder gleitenden Fenster im Bereich von 2,828 m bis 11,312 m ist; und/oder die Langwellenbandfilterung eine Filterung mit einem Wellenband oder einem gleitenden Fenster im Bereich von 11,312 m bis 45,248 m ist.

5. Straßenfertiger (30) nach einem der vorhergehenden Ansprüche, wobei die Auswertevorrichtung (2, 200, 250) dazu ausgebildet ist, ein oder das gefilterte Amplitudensignal und/oder die gemessene relative Position mittels einer Fourier-Transformation in ein Frequenzamplitudensignal zu transformieren, und wobei die Auswertevorrichtung (200) dazu ausgebildet ist, den Alarmindikator (A1, A2, A3) zu erzeugen, wenn ein vorbestimmter Schwellenwert (s1, s2, s3) im Frequenzamplitudensignal erreicht ist, wobei die Fourier-Transformation bevorzugt eine Sliding-Window-Fourier-Transformation ist, insbesondere eine Sliding-Window-Fourier-Transformation unter Verwendung einer Kurzwellenbandfilterung (PO), einer Mittelwellenbandfilterung (MO) oder einer Langwellenbandfilterung (GO).

6. Straßenfertiger (30) nach einem der vorhergehenden Ansprüche, wobei der Straßenfertiger (10) ferner eine Anzeigevorrichtung (300) umfasst, die mit der Auswertevorrichtung (2, 200, 250) verbunden ist, wobei die Anzeigevorrichtung (300) dazu ausgebildet ist, mindestens ein akustisches und/oder optisches Signal in Abhängigkeit von dem erzeugten Alarmindikator (A1; A2; A3) zu erzeugen; und/oder
die Anzeigevorrichtung (300) dazu ausgebildet ist, Ebenheitsdaten anzuzeigen, die mittels der Straßenfertiger-Auswertevorrichtung (200) aus den gemessenen relativen Positionen (d1, d2, d3) ermittelt werden.

7. Straßenfertiger (30) nach einem der vorhergehenden Ansprüche, wobei die Auswertevorrichtung (2, 200, 250) dazu ausgebildet ist, eine Vielzahl von gefilterten Amplitudensignalen zu erzeugen, wobei für jede gemessene relative Position (d1, d2, d3) ein gefiltertes Amplitudensignal erzeugt wird, und
die Auswertevorrichtung (2, 200, 250) ferner dazu ausgebildet ist, die Vielzahl von gefilterten Amplitudensignalen mittels einer Fourier-Transformation in eine Vielzahl von Frequenzamplitudensignalen zu transformieren, und
die Auswertevorrichtung (2, 200, 250) dazu ausgebildet ist, eine Vielzahl von Alarmindikatoren (A1, A2, A3) zu erzeugen, wenn ein vorbestimmter Schwellenwert (s1, s2, s3) der Vielzahl von Frequenzamplitudensignalen erreicht ist, der eine Unebenheit anzeigt.

8. Straßenfertiger (30) nach einem der vorhergehenden Ansprüche, wobei die erste Sensorvorrichtung (100) mindestens zwei Sensorköpfe umfasst, wobei die zwei Sensorköpfe der ersten Sensorvorrichtung auf entgegengesetzten Seiten des Straßenfertigers relativ zu einer Längsachse des Straßenfertigers angeordnet sind, wobei sich die Längsachse in einer Fahrtrichtung des Straßenfertigers erstreckt, und/oder
die zweite Sensorvorrichtung (102) mindestens zwei Sensorköpfe umfasst, wobei die zwei Sensorköpfe der zweiten Sensorvorrichtung auf entgegengesetzten Seiten des Straßenfertigers relativ zu einer Längsachse des Straßenfertigers angeordnet sind, wobei sich die Längsachse in einer Fahrtrichtung des Straßenfertigers erstreckt, und/oder
die dritte Sensorvorrichtung (104) mindestens zwei Sensorköpfe umfasst, wobei die zwei Sensorköpfe der dritten Sensorvorrichtung auf entgegengesetzten Seiten des Straßenfertigers relativ zu einer Längsachse des Straßenfertigers angeordnet sind, wobei sich die Längsachse in einer Fahrtrichtung des Straßenfertigers erstreckt.

9. Straßenfertiger (30) nach einem der vorhergehenden Ansprüche, wobei die Auswertevorrichtung (2, 200, 250) dazu ausgebildet ist, die Unebenheit des Planums mittels eines trainierten künstlichen neuronalen Netzwerks zu analysieren, wobei das künstliche neuronale Netzwerk eine Eingabeschicht aufweist, in die die gemessenen relativen Positionen (d1, d2, d3) als gefiltertes Amplitudensignal eingegeben werden, wobei das gefilterte Amplitudensignal mittels einer Vorverarbeitung erhalten wird, und wobei das künstliche neuronale Netzwerk ferner dazu ausgebildet ist, an einer Ausgabeschicht mindestens einen Unebenheitswert auszugeben, wobei die Auswertevorrichtung (2, 200, 250) dazu ausgebildet ist, einen Alarmindikator (A1, A2, A3) auszugeben, wenn ein vorbestimmter Schwellenwert (s1, s2, s3) des mindestens einen ausgegebenen Unebenheitswerts erreicht ist, der eine Unebenheit anzeigt, wobei bevorzugt mindestens drei Unebenheitswerte an einer Ausgabeschicht des künstlichen neuronalen Netzwerks ausgegeben werden, nämlich ein kurzwelliger Unebenheitswert, ein mittelwelliger Unebenheitswert und ein langwelliger Unebenheitswert.

10. Verfahren zur Echtzeiterfassung von Unebenheit eines Planums mit einem Straßenfertiger-Erfassungssystem, umfassend die Schritte:
- Messen einer relativen Position (d1) eines stationären Teils (32) eines Straßenfertigers (30) zum Planum mit einer ersten Sensorvorrichtung (100), wobei die erste Sensorvorrichtung an dem stationären Teil angebracht ist, und wobei der stationäre Teil bevorzugt ein Rahmen des Straßenfertigers oder ein Chassis ist, das an dem Rahmen des Straßenfertigers befestigt ist;
- Messen einer relativen Position (d2) einer Bohle (32) des Straßenfertigers (30) zum Planum mit einer zweiten Sensorvorrichtung (102), wobei die zweite Sensorvorrichtung an der Bohle angebracht ist, und wobei die Bohle beweglich mit dem stationären Teil des Straßenfertigers verbunden ist;
- Messen einer relativen Position (d3) zwischen dem stationären Teil (32) und der Bohle (32) mit einer dritten Sensorvorrichtung (104); und
- Analysieren der Unebenheit des Planums auf Basis der gemessenen relativen Positionen (d1, d2, d3) mit einer Straßenfertiger-Auswertevorrichtung (200), die mit den Sensorvorrichtungen (100, 102, 104) gekoppelt ist; und
- Erzeugen eines Alarmindikators (A1, A2, A3) mit der Straßenfertiger-Auswertevorrichtung, wenn ein vorbestimmter Schwellenwert (s1, s2, s3) erreicht ist, der eine Unebenheit anzeigt;
- optionales Erzeugen mindestens eines akustischen und/oder optischen Signals in Abhängigkeit von dem erzeugten Alarmindikator (A1; A2; A3) mit einer Anzeigevorrichtung (300), die mit der Straßenfertiger-Auswertevorrichtung (200) verbunden ist; oder
- optionales Anzeigen von Ebenheitsdaten, die mittels der Straßenfertiger-Auswertevorrichtung (200) aus den gemessenen relativen Positionswerten (d1, d2, d3) ermittelt werden, mit einer Anzeigevorrichtung (300).

11. Verfahren nach Anspruch 10, wobei das Analysieren der Unebenheit des Planums auf Basis der gemessenen relativen Positionen (d1, d2, d3) die weiteren Schritte umfasst:
- Transformieren mindestens einer gemessenen relativen Position (d1, d2, d3) in mindestens ein gefiltertes Amplitudensignal, bevorzugt Transformieren aller gemessenen relativen Positionen in eine Vielzahl von gefilterten Amplitudensignalen;
- Transformieren des mindestens einen gefilterten Amplitudensignals mittels einer Fourier-Transformation in ein Frequenzamplitudensignal, bevorzugt einer Sliding-Window-Fourier-Transformation, insbesondere einer Sliding-Window-Fourier-Transformation, die ein kurzwelliges gleitendes Fenster im Bereich von 0,707 m bis 2,828 m, ein mittelwelliges gleitendes Fenster im Bereich von 2,828 m bis 11,312 m, und ein langwelliges gleitendes Fenster mit einem Bereich von 11,312 m bis 45,248 m umfasst; und
- Erzeugen eines Alarmindikators (A1, A2, A3), wenn ein vorbestimmter Schwellenwert (s1, s2, s3) des Frequenzamplitudensignals erreicht ist, der eine Unebenheit anzeigt.

12. Verfahren nach Anspruch 10, wobei ein künstliches neuronales Netzwerk zur Echtzeiterfassung von Unebenheit eines Planums verwendet wird, wobei das künstliche neuronale Netzwerk zur Klassifizierung mindestens einer ersten, einer zweiten und/oder einer dritten Unebenheit eines Planums basierend auf einem Unebenheitsprofil des Planums konfiguriert ist, wobei das Unebenheitsprofil mittels eines Straßenfertiger-Erfassungssystems (10) zur Erfassung eines Baustellen-Unebenheitsprofils des Planums (UP1) zur Echtzeiterfassung von Unebenheit eines Planums ermittelt wird, wobei das Straßenfertiger-Erfassungssystem umfasst:
- eine erste Sensorvorrichtung (100) zum Messen einer relativen Position (d1) des stationären Teils (32) des Straßenfertigers (30) zum Planum, wobei die erste Sensorvorrichtung an dem stationären Teil angebracht ist, und wobei der stationäre Teil bevorzugt ein Rahmen des Straßenfertigers oder ein Chassis ist, das an dem Rahmen des Straßenfertigers befestigt ist, und
- eine zweite Sensorvorrichtung (102) zum Messen einer relativen Position (d2) der Bohle (34) des Straßenfertigers (30) zum Planum, wobei die zweite Sensorvorrichtung an der Bohle angebracht ist, und wobei die Bohle beweglich mit dem stationären Teil des Straßenfertigers verbunden ist, und
- eine dritte Sensorvorrichtung (104) zum Messen einer relativen Position (d3) zwischen dem stationären Teil (32) und der Bohle (34); und
- eine Straßenfertiger-Auswertevorrichtung (200), die mit der Sensorvorrichtung (100, 102, 104) gekoppelt ist, wobei die Straßenfertiger-Auswertevorrichtung dazu ausgebildet ist, die Unebenheit des Planums auf Basis der gemessenen relativen Position (d1, d2, d3) zu analysieren, und die Straßenfertiger-Auswertevorrichtung dazu ausgebildet ist, einen Alarmindikator (A1, A2, A3) zu erzeugen, wenn ein vorbestimmter Schwellenwert (s1, s2, s3) erreicht ist, der eine Unebenheit anzeigt.

13. Verfahren nach Anspruch 12, wobei die Klassifizierung mindestens einer ersten, zweiten und dritten Unebenheit des Planums auf gemessenen relativen Positionen eines Straßenfertigers basiert, wobei
- eine erste relative Position eine gemessene relative Position eines stationären Teils des Straßenfertigers zum Planum ist, und/oder
- eine zweite relative Position eine gemessene relative Position einer Bohle des Straßenfertigers zum Planum ist, und/oder
- eine dritte relative Position eine gemessene relative Position zwischen dem stationären Teil und der Bohle ist, und bevorzugt
- die erste Unebenheit eine kurzwellige Unebenheit ist, insbesondere eine kurzwellige Unebenheit im Bereich von 0,707 m bis 2,828 m,
- die zweite Unebenheit eine mittelwellige Unebenheit ist, insbesondere eine mittelwellige Unebenheit im Bereich von 2,828 m bis 11,312 m, und
- die dritte Unebenheit eine langwellige Unebenheit ist, insbesondere eine langwellige Unebenheit im Bereich von 11,312 m bis 45,248 m.

## Revendications

1. Finisseur (30) avec un cadre, dans lequel une table est montée de manière mobile sur le cadre, dans lequel le finisseur comporte un système de détection de finisseur (10) pour une détection en temps réel d'une irrégularité d'un planum, dans lequel le système de détection de finisseur comprend :
- un premier dispositif de capteur (100) pour la mesure d'une position relative (d₁) d'une partie stationnaire (32) du finisseur (30) par rapport au planum, dans lequel le premier dispositif de capteur est monté sur la partie stationnaire, et dans lequel la partie stationnaire est de préférence le cadre du finisseur ou un châssis qui est fixé au cadre du finisseur, et
- un deuxième dispositif de capteur (102) pour la mesure d'une position relative (d₂) de la table (34) du finisseur (30) par rapport au planum, dans lequel le deuxième dispositif de capteur est monté sur la table, et dans lequel la table est reliée de manière mobile à la partie stationnaire du finisseur, et
- un troisième dispositif de capteur (104) pour la mesure d'une position relative (d₃) entre la partie stationnaire (32) et la table (34) ; et
- un dispositif d'évaluation de finisseur (200) qui est couplé aux dispositifs de capteurs (100, 102, 104), dans lequel le dispositif d'évaluation de finisseur est adapté pour analyser l'irrégularité du planum sur la base des positions relatives mesurées (d₁, d₂, d₃) et le dispositif d'évaluation de finisseur est adapté pour générer un indicateur d'alarme (A₁, A₂, A₃), lorsqu'une valeur seuil prédéterminée (s₁, s₂, s₃) est atteinte indiquant une irrégularité.

2. Finisseur (30) selon la revendication précédente, dans lequel le dispositif d'évaluation (2, 200, 250) comporte un convertisseur de signal (202) pour la génération d'au moins un signal d'amplitude filtré, dans lequel le signal d'amplitude filtré est généré à partir d'au moins une des positions relatives mesurées (d₁, d₂, d₃) et dans lequel le signal d'amplitude filtré est un signal qui comporte des données d'amplitude et des données de trajet du finisseur.

3. Finisseur (30) selon l'une des revendications précédentes, dans lequel le dispositif d'évaluation (2, 200, 250) est adapté pour limiter un ou le signal d'amplitude filtré et/ou la position relative mesurée au moyen d'un premier filtre (202), dans lequel le premier filtre est configuré pour limiter un ou le signal d'amplitude filtré et/ou la position relative mesurée avec un filtrage par bande d'ondes totale,
dans lequel de préférence le filtrage par bande d'ondes totale est un filtrage avec une bande d'ondes dans une plage de 0,707 m à 45,248 m, et dans lequel
de préférence le premier filtre est un filtre linéaire, en particulier un filtre de Butterworth ou un filtre à phase nulle.

4. Finisseur (30) selon l'une des revendications précédentes, dans lequel le dispositif d'évaluation (2, 200, 250) est adapté pour détecter une irrégularité des petites ondes, une irrégularité des moyennes ondes et une irrégularité des grandes ondes au moyen d'un deuxième filtre (204), dans lequel le deuxième filtre est configuré pour analyser un ou le signal d'amplitude filtré et/ou la position relative mesurée avec un filtrage par bande de petites ondes, un filtrage par bande de moyennes ondes et/ou un filtrage par bande de grandes ondes, dans lequel de préférence
le filtrage par bande de petites ondes est un filtrage avec une bande d'ondes ou fenêtre glissante dans une plage de 0,707 m à 2,828 m ; et/ou le filtrage par bande de moyennes ondes est un filtrage avec une bande d'ondes ou fenêtre glissante dans une plage de 2,828 m à 11,312 m ; et/ou la bande de grandes ondes, est un filtrage avec une bande d'ondes ou une fenêtre glissante dans une plage de 11,312 m à 45,248 m.

5. Finisseur (30) selon l'une des revendications précédentes, dans lequel le dispositif d'évaluation (2, 200, 250) est adapté pour transformer une ou l'amplitude filtrée et/ou le signal de position relative mesurée en un signal d'amplitude de fréquence au moyen d'une transformation de Fourier et dans lequel le dispositif d'évaluation (200) est adapté pour générer l'indicateur d'alarme (A1, A2, A3), lorsqu'une valeur seuil prédéterminée (s₁, s₂, s₃) dans un signal d'amplitude de fréquence est atteinte, dans lequel la transformation de Fourier est de préférence une transformée de Fourier à fenêtre glissante, en particulier une transformée de Fourier à fenêtre glissante utilisant un filtrage par bande de petites ondes (PO), un filtrage par bande de moyennes ondes (MO) ou un filtrage par bande de grandes ondes (GO).

6. Finisseur (30) selon l'une des revendications précédentes, dans lequel le finisseur (10) comprend en outre un dispositif d'affichage (300) qui est relié au dispositif d'évaluation (2, 200, 250), dans lequel le dispositif d'affichage (300) est adapté pour générer au moins un signal acoustique et/ou optique en fonction de l'indicateur d'alarme (A1 _{;} A2 ; A3) généré ; et/ou
le dispositif d'affichage (300) est adapté pour afficher des données de régularité, lesquelles sont déterminées au moyen du dispositif d'évaluation de finisseur (200) à partir des valeurs de positions relatives mesurées (d₁, d2, d3).

7. Finisseur (30) selon l'une des revendications précédentes, dans lequel le dispositif d'évaluation (2, 200, 250) est adapté pour générer une pluralité de signaux d'amplitude filtrés, dans lequel pour chaque position relative mesurée (d₁, d₂, d₃) un signal d'amplitude filtré est généré et
le dispositif d'évaluation (2, 200, 250) est adapté en outre pour transformer la pluralité de signaux d'amplitude filtrés en une pluralité de signaux d'amplitude de fréquence au moyen d'une transformation de Fourier, et
le dispositif d'évaluation (2, 200, 250) est adapté pour générer une pluralité d'indicateurs d'alarme (A1, A2, A3), lorsqu'une valeur seuil prédéterminée (s₁, s₂, s₃) de la pluralité de signaux d'amplitude de fréquence est atteinte indiquant une irrégularité.

8. Finisseur (30) selon l'une des revendications précédentes, dans lequel le premier dispositif de capteur (100) comporte au moins deux têtes de capteur, dans lequel les deux têtes de capteur du premier dispositif de capteur sont agencées sur des côtés opposés du finisseur par rapport à un axe longitudinal du finisseur, dans lequel l'axe longitudinal s'étend dans une direction de déplacement du finisseur, et/ou
le deuxième dispositif de capteur (102) comporte au moins deux têtes de capteur, dans lequel les deux têtes de capteur du deuxième dispositif de capteur sont agencées sur des côtés opposés du finisseur par rapport à un axe longitudinal du finisseur, dans lequel l'axe longitudinal s'étend dans une direction de déplacement du finisseur, et/ou
le troisième dispositif de capteur (104) comporte au moins deux têtes de capteur, dans lequel les deux têtes de capteur du troisième dispositif de capteur sont agencées sur des côtés opposés du finisseur par rapport à un axe longitudinal du finisseur, dans lequel l'axe longitudinal s'étend dans une direction de déplacement du finisseur.

9. Finisseur (30) selon l'une des revendications précédentes, dans lequel le dispositif d'évaluation (2, 200, 250) est adapté pour analyser l'irrégularité du planum au moyen d'un réseau neuronal artificiel entraîné, dans lequel le réseau neuronal artificiel a une couche d'entrée dans laquelle les positions relatives mesurées (d₁, d₂, d₃) sont entrées en tant que signal d'amplitude filtré, dans lequel le signal d'amplitude filtré est obtenu au moyen d'un prétraitement, et dans lequel le réseau neuronal artificiel est adapté en outre pour délivrer au moins une valeur d'irrégularité au niveau d'une couche de sortie, dans lequel le dispositif d'évaluation (2, 200, 250) est adapté pour délivrer un indicateur d'alarme (A1, A2, A3), lorsqu'une valeur seuil prédéterminée (s₁, s₂, s₃) de l'au moins une valeur d'irrégularité délivrée est atteinte indiquant une irrégularité, dans lequel de préférence au moins trois valeurs d'irrégularité sont délivrées au niveau d'une couche de sortie du réseau neuronal artificiel, à savoir une valeur d'irrégularité des petites ondes, une valeur d'irrégularité des moyennes ondes et une valeur d'irrégularité des grandes ondes.

10. Procédé de détection en temps réel d'une irrégularité d'un planum avec un système de détection de finisseur, comprenant les étapes de :
- mesure avec un premier dispositif de capteur (100) d'une position relative (d₁) d'une partie stationnaire (32) d'un finisseur (30) par rapport au planum, dans lequel le premier dispositif de capteur est monté sur la partie stationnaire, et dans lequel la partie stationnaire est de préférence un cadre du finisseur ou un châssis qui est fixé au cadre du finisseur ;
- mesure avec un deuxième dispositif de capteur (102) d'une position relative (d₂) d'une table (32) du finisseur (30) par rapport au planum, dans lequel le deuxième dispositif de capteur est monté sur la table, et dans lequel la table est reliée de manière mobile à la partie stationnaire du finisseur ;
- mesure avec un troisième dispositif de capteur (104) d'une position relative (d₃) entre la partie stationnaire (32) et la table (32) ; et
- analyse avec un dispositif d'évaluation de finisseur (200) qui est couplé aux dispositifs de capteurs (100, 102, 104) de l'irrégularité du planum sur la base des positions relatives mesurées (d₁, d₂, d₃) ; et
- génération avec le dispositif d'évaluation de finisseur d'un indicateur d'alarme (A1, A2, A3), lorsqu'une valeur seuil prédéterminée (s₁, s₂, s₃) est atteinte indiquant une irrégularité ;
- génération optionnelle avec un dispositif d'affichage (300) qui est relié au dispositif d'évaluation de finisseur (200) d'au moins un signal acoustique et/ou optique en fonction de l'indicateur d'alarme (A1 _{;} A2 ; A3) généré ; ou
- affichage optionnel avec un dispositif d'affichage (300) de données de régularité, lesquelles sont déterminées au moyen du dispositif d'évaluation de finisseur (200) à partir des valeurs de positions relatives mesurées (d₁, d2, d3).

11. Procédé selon la revendication 10, dans lequel l'analyse de l'irrégularité du planum sur la base des positions relatives mesurées (d₁, d₂, d₃) comporte les étapes supplémentaires de :
- transformation d'au moins une position relative mesurée (d₁, d₂, d₃) en au moins un signal d'amplitude filtré, de préférence transformation de toutes les positions relatives mesurées en une pluralité de signaux d'amplitude filtrés ;
- transformation de l'au moins un signal d'amplitude filtré en un signal d'amplitude de fréquence au moyen d'une transformation de Fourier, de préférence d'une transformation de Fourier à fenêtre glissante, en particulier d'une transformation de Fourier à fenêtre glissante laquelle comporte une fenêtre glissante de petites ondes dans une plage de 0,707 m à 2,828 m, une fenêtre glissante de moyennes ondes dans une plage de 2,828 m à 11,312 m et une fenêtre glissante de grandes ondes avec une plage de 11,312 m à 45,248 m ; et
- génération d'un indicateur d'alarme (A1, A2, A3), lorsqu'une valeur seuil prédéterminée (s₁, s₂, s₃) du signal d'amplitude de fréquence est atteinte indiquant une irrégularité.

12. Procédé selon la revendication 10, dans lequel un réseau neuronal artificiel est utilisé pour la détection en temps réel d'une irrégularité d'un planum, dans lequel le réseau neuronal artificiel est configuré pour une classification d'au moins une première, une deuxième et/ou une troisième irrégularité d'un planum sur la base d'un profil d'irrégularité du planum, dans lequel le profil d'irrégularité est déterminé au moyen d'un système de détection de finisseur (10) pour la détection d'un profil d'irrégularité de chantier du finisseur (UP1), pour une détection en temps réel d'une irrégularité d'un planum, dans lequel le système de détection de finisseur comprend :
- un premier dispositif de capteur (100) pour la mesure d'une position relative (d₁) de la partie stationnaire (32) du finisseur (30) par rapport au planum, dans lequel le premier dispositif de capteur est monté sur la partie stationnaire, et dans lequel la partie stationnaire est de préférence un cadre du finisseur ou un châssis qui est fixé au cadre du finisseur, et
- un deuxième dispositif de capteur (102) pour la mesure d'une position relative (d₂) de la table (34) du finisseur (30) par rapport au planum, dans lequel le deuxième dispositif de capteur est monté sur la table, et dans lequel la table est reliée de manière mobile à la partie stationnaire du finisseur, et
- un troisième dispositif de capteur (104) pour la mesure d'une position relative (d₃) entre la partie stationnaire (32) et la table (34) ; et
- un dispositif d'évaluation de finisseur (200) qui est couplé au dispositif de capteur (100, 102, 104), dans lequel le dispositif d'évaluation de finisseur est adapté pour analyser l'irrégularité du planum sur la base de la position relative mesurée (d₁, d₂, d₃) et le dispositif d'évaluation de finisseur est adapté pour générer un indicateur d'alarme (A₁, A₂, A₃), lorsqu'une valeur seuil prédéterminée (s₁, s₂, s₃) est atteinte indiquant une irrégularité.

13. Procédé selon la revendication 12, dans lequel la classification d'au moins une première, deuxième et troisième irrégularité du planum est basée sur des positions relatives mesurées d'un finisseur, dans lequel
- une première position relative est une position relative mesurée d'une partie stationnaire du finisseur par rapport au planum, et/ou
- une deuxième position relative est une position relative mesurée d'une table du finisseur par rapport au planum, et/ou
- une troisième position relative est une position relative mesurée entre la partie stationnaire et la table, et de préférence
- la première irrégularité est une irrégularité des petites ondes, en particulier une irrégularité des petites ondes dans une plage de 0,707 m à 2,828 m,
- la deuxième irrégularité est une irrégularité des moyennes ondes, en particulier une irrégularité des moyennes ondes dans une plage de 2,828 m à 11,312 m, et
- la troisième irrégularité est une irrégularité des grandes ondes, en particulier une irrégularité des grandes ondes dans une plage de 11,312 m à 45,248 m.
